# EUROPEAN PATENT SPECIFICATION

(11) **EP 1 491 449 B1**
(45) Date of publication and mention of the grant of the patent: **20.07.2005**
(21) Application number: 03709838.1
(22) Date of filing: 20.03.2003
(51) Int. Cl.: B65B 55/02, A61J 1/05, A61K 35/14, A61K 35/16, A61K 35/18, A23J 1/06, A23K 1/04

(54) **METHOD OF PRODUCING A PRODUCT DERIVED FROM ANIMAL BLOOD IN THE FORM OF A PACKED POWDER, PRODUCT AND CORRESPONDING USES**
VERFAHREN ZUR HERSTELLUNG EINES VON TIERBLUT ABGELEITETEN PRODUKTS IN FORM EINES VERDICHTETEN PULVERS, PRODUKT UND ENTSPRECHENDE VERWENDUNG
PROCEDE DE FABRICATION D'UN PRODUIT DERIVE DU SANG ANIMAL SOUS FORME DE POUDRE ET EMBALLE, PRODUIT ET UTILISATIONS CORRESPONDANTS

(30) Priority: 01.04.2002 ES 200200749
(43) Date of publication of application: 29.12.2004
(73) Proprietor: APC Europe S.A., 08400 Granollers (Barcelona) (ES)
(72) Inventor: POLO POZO, Francisco, Javier, E-08210 Barberá Del Vallés (Barcelona) (ES); R DENAS NAVARRO, Jesús, E-08031 Barcelona (ES); RODR GUEZ CANEL, Carmen, E-08016 Barcelona (ES); SABORIDO GARC A, Neus, E-08470 Sant Celoni (Barcelona) (ES)
(74) Representative: Curell Aguilà, Marcelino
(86) International application number: PCT/ES2003/000129
(87) International publication number: WO 2003/082678

(56) References cited:
- EP-A1- 0 844 005
- US-A- 4 347 259
- US-A- 4 495 278

## Description

### Field of the invention

The invention refers to a method of manufacturing a packaged powdered animal blood derived product. An objective of the invention is likewise a packaged powdered animal blood derived product. Finally, a further objective of the invention is also the use of a sheet material for the manufacture of enveloping for products derived from powdered animal blood and uses of the method according to the invention.

### State of the art

Products derived from animal blood are known, said blood being obtained from animals slaughtered in the abattoir. There are several products of this type, such as plasma, red corpuscle, haemoglobin, sundry protein fractions derived from animal blood, etc. These products are normally used in animal and human consumption. Different methods for the manufacture of these products are also known, which obtain powdered products, of low humidity, and which are supplied packaged.

These products, due to their origin, inevitably have a certain bacterial charge: enterobacteria, Coliforms, Salmonella, S. aureus, Clostridium sulphate reducers and Clostridium perfringens, among others. It would be appropriate to diminish this bacterial charge to minimum established values. However, in the case of animal blood and products derived from animal blood such as plasma or red corpuscle, it is not possible to apply standard treatments to diminish the microbiological charge. Thus it is not possible to apply high temperature thermal treatment (above 65 to 70°C) since this produces protein coagulation, it is likewise not possible to lower the pH to below pH 4 since this also produces protein coagulation, the application of ultraviolet light is not feasible due to its low transmittance (inverse of the absorbency) at these wavelengths, neither is pasteurisation possible in the manner conceived for other food liquids such as milk as a result of the protein coagulation which is produced and finally irradiation with sources of Gamma radiation (Cobalt 60) though feasible from a technical point of view, is greatly opposed at both a social and legislative level.

These products must maintain their physicochemical and biological features intact, and must thus be able to coagulate and form a three dimensional gel which retains water and forms a non collapsible structure when subjected to a high temperature treatment or when the pH is lowered below 4. They must also maintain their biological properties intact, such properties being understood to be the high buffer capacity of the albumin, the immunoglobulin antigen recognition capacity, the presence of bioactive peptides, etc. These products therefore have a series of parameters which should maintain values within established limits, such as for example the percentage of protein, the percentage of humidity, the percentage of insolubles, the percentage of ash, the colour, the firmness of the gel, the water retention capacity, etc. In particular, both the firmness of the gel and the water retention capacity are two parameters for which it is desirable to obtain values which are as high as possible.

A method of manufacturing egg albumin in powder or dehydrated form is also known, and comprises a treatment for the elimination of Salmonella. For such the albumin powder, which has a humidity content of between 6 and 8% is subjected to temperatures of above 50.5°C for a time equal to or less than 7 days. The effect of this method on other bacterias is however unknown. The consequences that this treatment could have on blood derived products are therefore also unknown, and the multiple proteins of such could suffer problems of denaturalisation. It is known that at a temperature of approximately 70°C, blood derived products become completely insoluble.

In the field of pharmaceutics there is known a thermal treatment for viral inactivation, specifically for the HIV virus (AIDS virus) and HBV (hepatitis B virus) in human blood derived products. This treatment is performed in pharmaceutical products intended primarily for injection, and is described concretely for albumin fractions and factor VIII (coagulation factor) fractions of human origin. The application of this treatment to whole blood phases (plasma, whole blood or red corpuscles) has not been described. In this case the treatment aims to alter the protein structure of the virus by means of a temperature rise. The increase in temperature provokes the denaturalisation of the viral proteins and their consequent loss of structure. The basic parameters of the thermal treatment for viral inactivation are a temperature of between 60°C and 70°C and a duration of between 2 and 72 hours. Stabilisers are used which stabilise the product against the thermal treatment, such as for example carbohydrates, sorbitol, glycine saccharose, etc. Viral inactivation is only applicable for given formulations of the product to be treated (type of protein, stabilisers used, and other components such as salts and excipients). Document US-A-4 495 278, upon which the preamble of independent product claim 5 is based, discloses a method involving heating at 40 to 80°C for 5 to 200 hours.

### Summary of the invention

The objective of the invention is to overcome the above drawbacks. This objective is achieved by means of a method according to claim 1.

In fact, the manufacturing method according to the invention allows diminution of bacterial charge for packaged powdered animal blood derived products without any loss to the remaining properties. In particular there is no significant worsening of solubility (percentage of insolubles) and, in addition, as regards the plasma, there is an improvement in the water retention capacity and, in certain cases of the firmness of the gel. In addition the thermal treatment is performed on the product already packaged in its final enveloping, and thus additional product handling phases are not required, merely storage of the packaged final product at given temperature conditions and for a given period of time, which means minimum added costs for the product. Furthermore, given that the product is already packaged, any subsequent risk of contamination due to handling is avoided. Similarly, the method can be performed without the need to add any type of stabiliser, and is effective with regard to the entire range of bacteria necessary to regulate in the product derived from animal blood.

Logically, it should be understood that similar products derived from animal blood, such as granulates, are likewise held to be within the scope of the invention, since a granulate is basically a powder duly agglomerated.

The duration of the process (in general several days) allows simpler resolution of possible problems arising during such process.

The thermal treatment applied to the product is a treatment which is not associated with negative environmental aspects (radiation, pollution, etc). What is more, it does not suppose the addition of chemical reagents nor generates chemical by-products.

The fact that the thermal treatment is performed with respect to the final product allows minimisation of alterations in said product and thus there are no losses in efficiency or quantity of said final product.

The method achieves bacteriological diminution, probably due to subjecting the bacteria to a situation of stress. For such the bacteria are placed at a temperature favourable for growth and reproduction, but in an environment of low humidity and low water biological activity, natural characteristics of a powdered product. In these conditions the micro-organisms are in a situation of stress in which they cannot divide and die from absence of conditions suitable for their survival. It should be recalled that the products derived from powdered blood normally have humidity of less than 15%, and always less than 20%. Though this humidity is not an intrinsic requirement for developing the method according to the invention, it should be taken into account that a product derived from powdered blood with humidity of above 20% is already a product that has lost the physical characteristics of powder since it is practically in a doughy state.

The method can be employed for any product derived from animal blood, either whole blood, plasma, red corpuscles or derivatives of any of the above.

According to the method of claim 1 packaging is carried out with an enveloping whose permeability to water vapour is less than 3g/m2/day. In fact, although the powdered product normally has a sufficiently low humidity, it has been observed that the efficiency of the method improves if an enveloping is used with low permeability to water vapour. In this manner one avoids that the environmental humidity penetrates in the interior of the enveloping and thus in contact with the product rendering it insoluble by being retained in such due to the high water retention capacity displayed by blood proteins. Furthermore it has been observed that in this manner the properties of gel firmness and water retention capacity are improved.

Within the time and temperature ranges of the treatment, it is possible to effect different strategies. On one hand it is possible to employ lower temperatures, with higher treatment duration. Thus, for example, a particularly advantageous method is obtained by subjecting the packaged product to a temperature of between 33°C and 40°C, preferably 37°C. In such case the optimal duration for which the product should be exposed to this temperature is greater than 7 days, advantageously between 10 and 20 days. Another interesting alternative is obtained by subjecting the packaged product to a temperature of above 40°C for a duration of less than 21 days.

A further objective of the invention is a packaged powdered animal blood derived product in an enveloping whose permeability to water vapour is less than 3g/m2/day. In fact, a product packaged in this manner can be subjected to the method according to the invention in optimal conditions, since its enveloping isolates it perfectly from the environmental humidity.

Preferably the product has humidity of less than 15% in weight, and more preferably less than 10% in weight. As noted previously low humidity is one of the factors than create the environment of stress for the bacteria, which is why it is particularly important to reduce the humidity of the product.

Advantageously the treated product has a total quantity of aerobes of less than 10⁵ cfu/g (colony forming units per gram), preferably less than 5 x 10⁴ cfu/g and most preferably less than 10⁴ cfu/g.

As already indicated above, the product is preferably plasma, red corpuscle, haemoglobin, or protein fractions derived from animal blood. The origin of the blood can be from any animal slaughtered in an abattoir, such as for example pig, cow or goat.

Preferably the enveloping in which the animal blood product is packaged comprises a sheet material of the group consisting of polyolefines (such as for example polyethylene and/or polypropylene), aluminium and combinations of the above. These sheet materials are readily available for use in enveloping and sufficiently low permeability to humidity can be obtained. In particular it is possible to obtain permeability of less than 3g/m2/day with polyethylene bags having a thickness greater than or equal to approximately between 25 and 35 microns (25 microns for high density polyethylene (HDPE), 35 microns for low density polyethylene (LDPE)). The aluminium sheets employed in enveloping have very much lower permeability to water vapour than the above.

An additional objective of the invention is the use of a sheet material whose permeability to water vapour is less than 3g/m2/day for the manufacturing of enveloping for products derived from powdered animal blood.

Another objective of the invention is the use of a method according to the invention to increase the water retention capacity of a powdered blood plasma. As shall be described below, the method according to the invention allows increase in the water retention capacity of a powdered blood plasma.

A further objective of the invention is the use of a method according to the invention for accelerated diminution of the total quantity of micro-organisms or bacteria in a product derived from powdered animal blood.

A final objective of the invention is the use of a method according to the invention to prepare a packaged powdered animal blood derived product suitable for human and animal consumption.

### Brief description of the drawings

Other advantages and features of the invention may be appreciated from the following entirely non limitative description, in which a preferred embodiment of the invention is described with reference to the accompanying drawings, in which:
Figure 1, is a graph displaying water vapour permeability in relation to polyethylene sheet thickness,
Figures 2 to 6, are graphs of the results of example 1, with powdered haemoglobin:

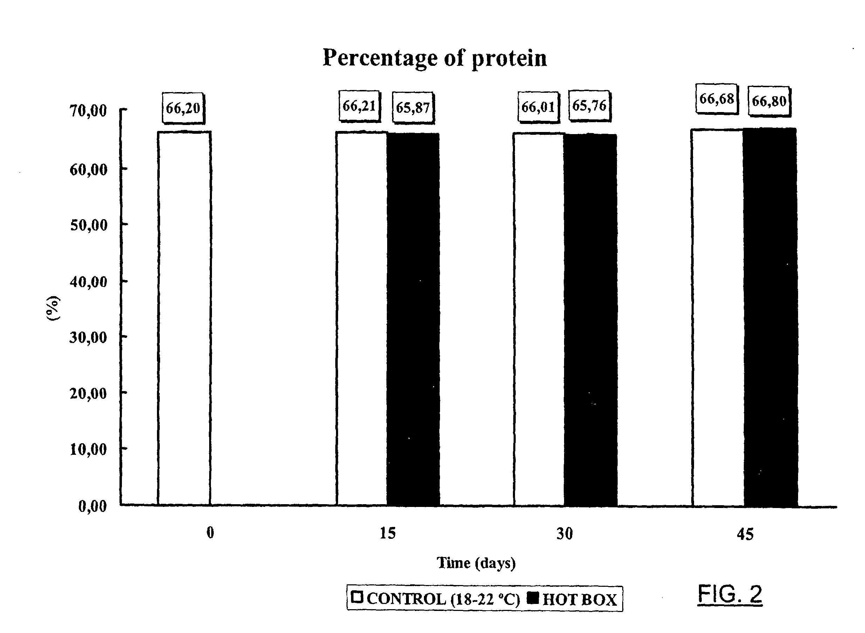

Figure 2, percentage of protein over time,

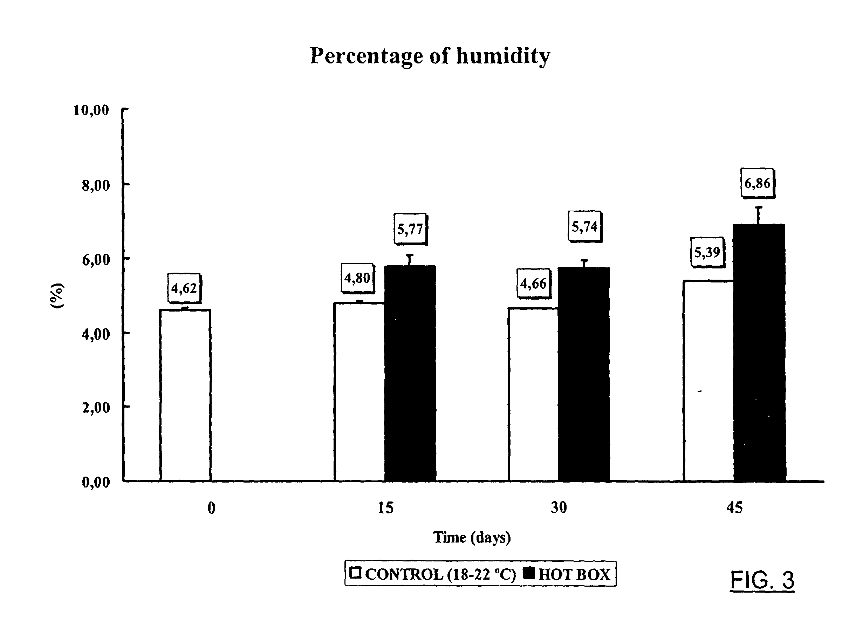

Figure 3, percentage of humidity over time,

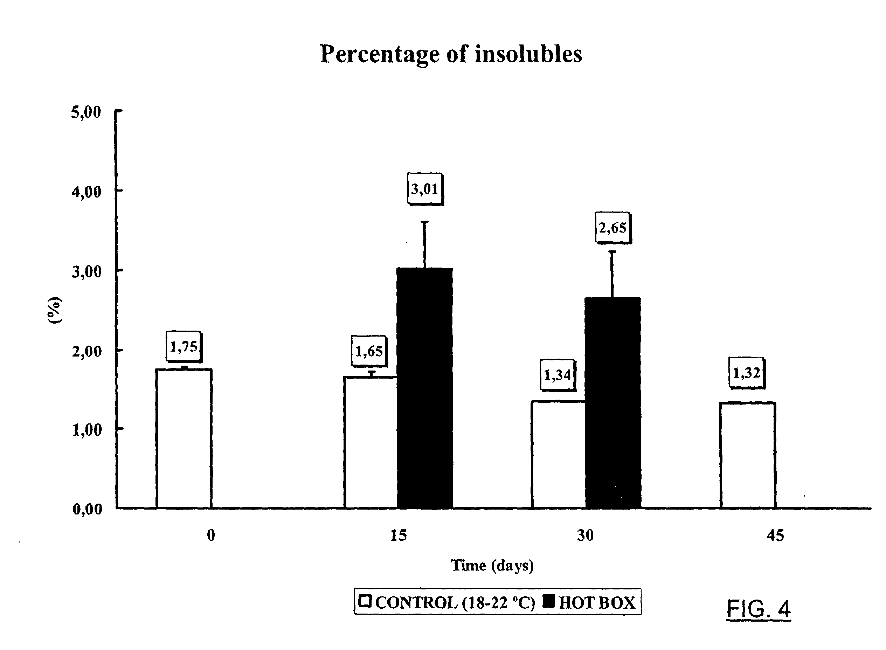

Figure 4, percentage of insolubles over time,

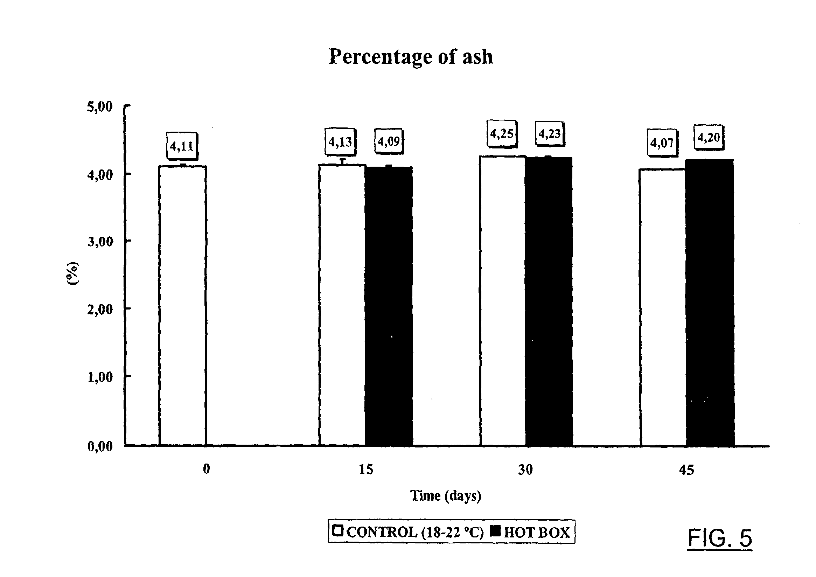

Figure 5, percentage of ash over time,

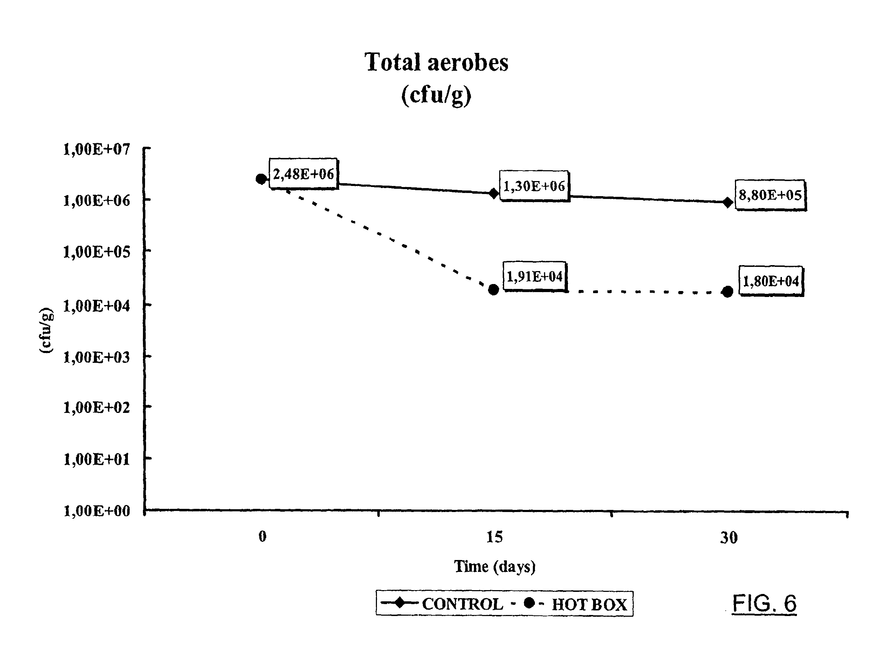

Figure 6, total aerobes over time,

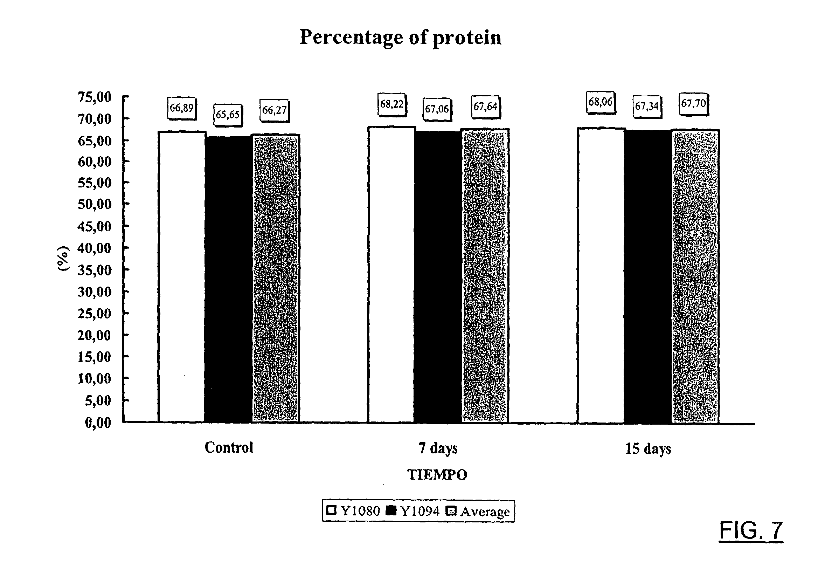

Figures 7 to 13, are graphs of the results of example 2, with powdered haemoglobin:
Figure 7, percentage of protein over time,

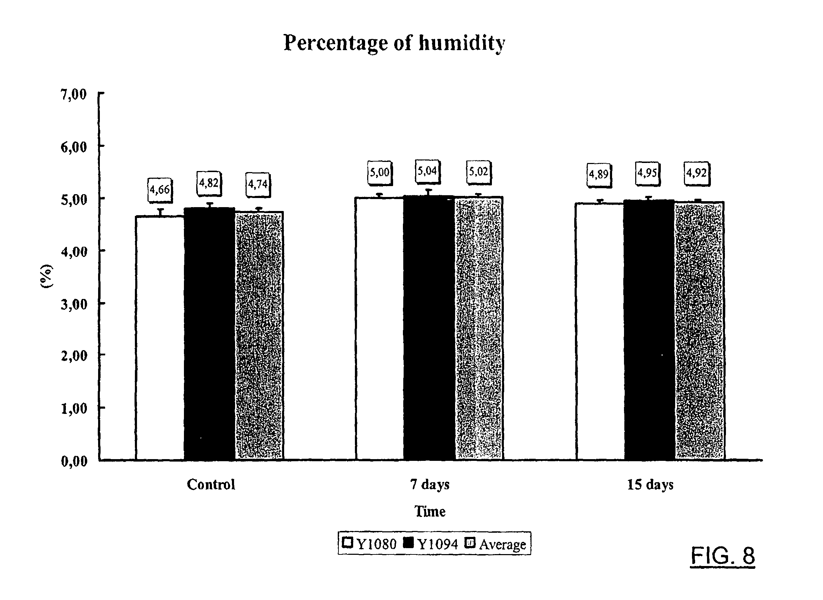

Figure 8, percentage of humidity over time,

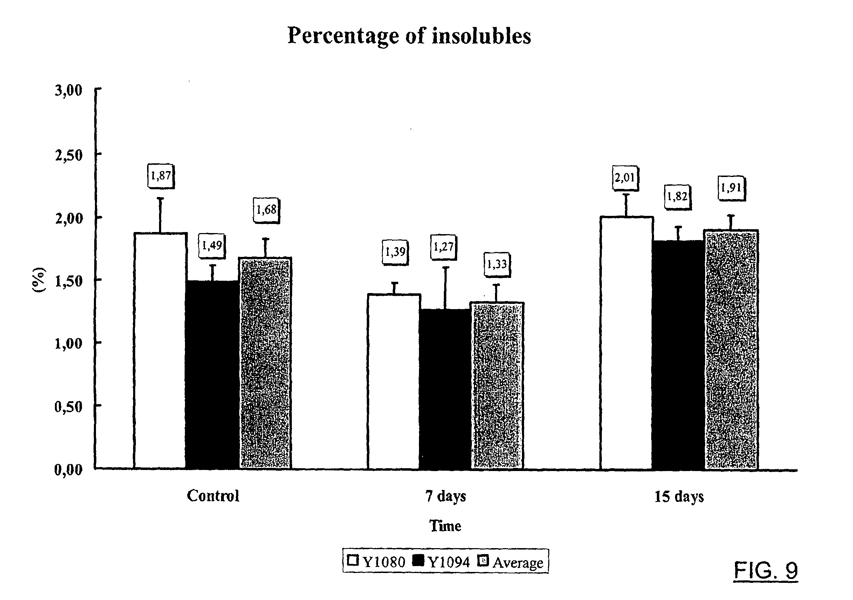

Figure 9, percentage of insolubles over time,

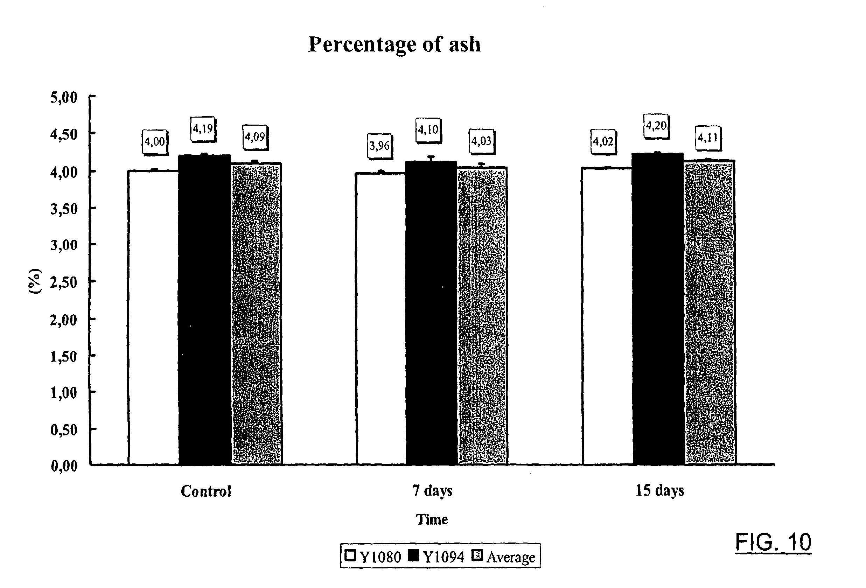

Figure 10, percentage of ash over time,

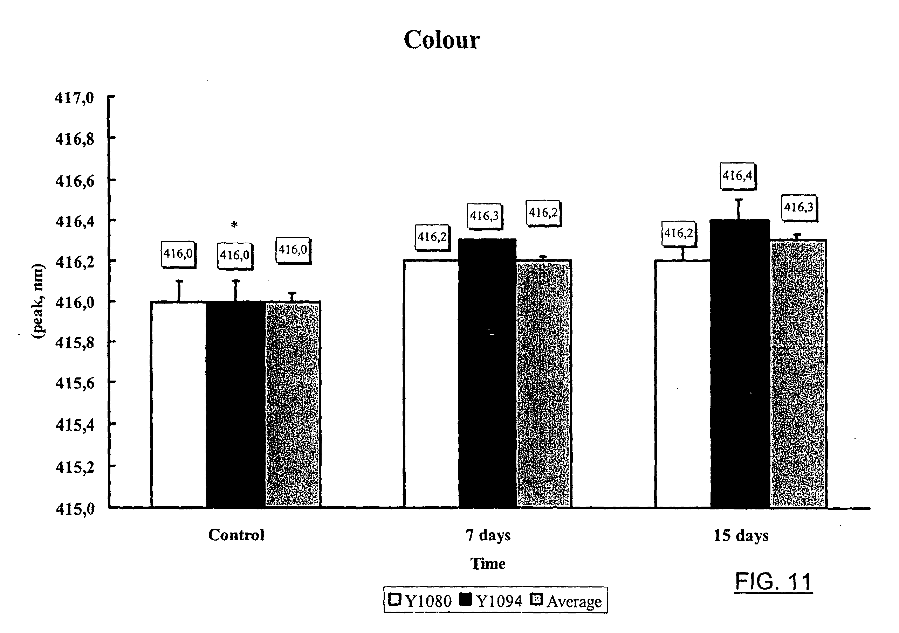

Figure 11, colour peak over time,

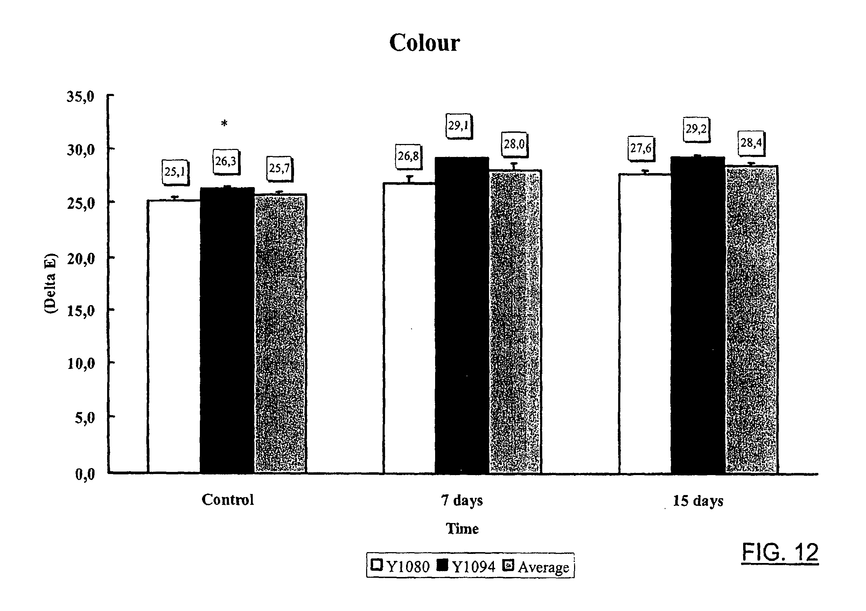

Figure 12, colour delta E over time,

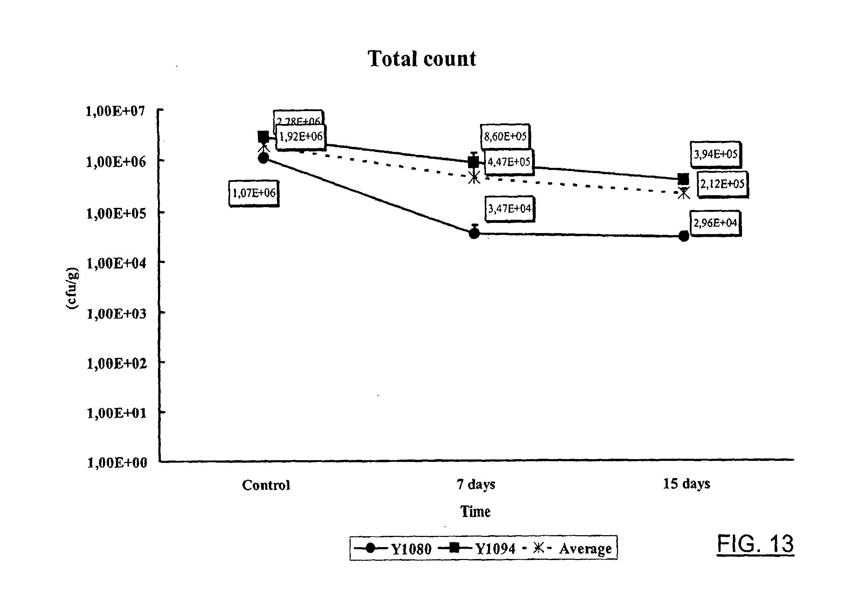

Figure 13, total aerobes over time,

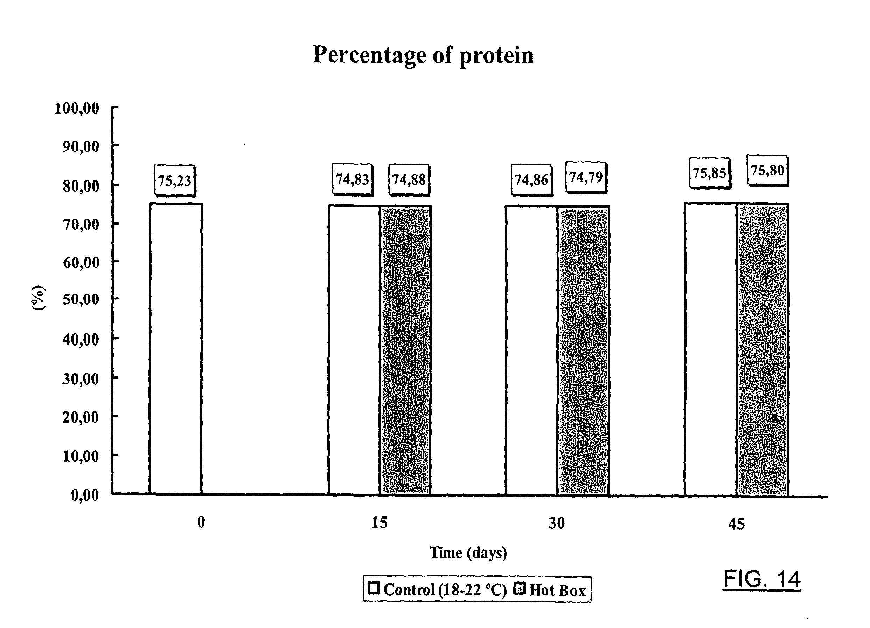

Figures 14 to 21, are graphs of the results of example 3, with spray dried animal plasma:
Figure 14, percentage of protein over time,

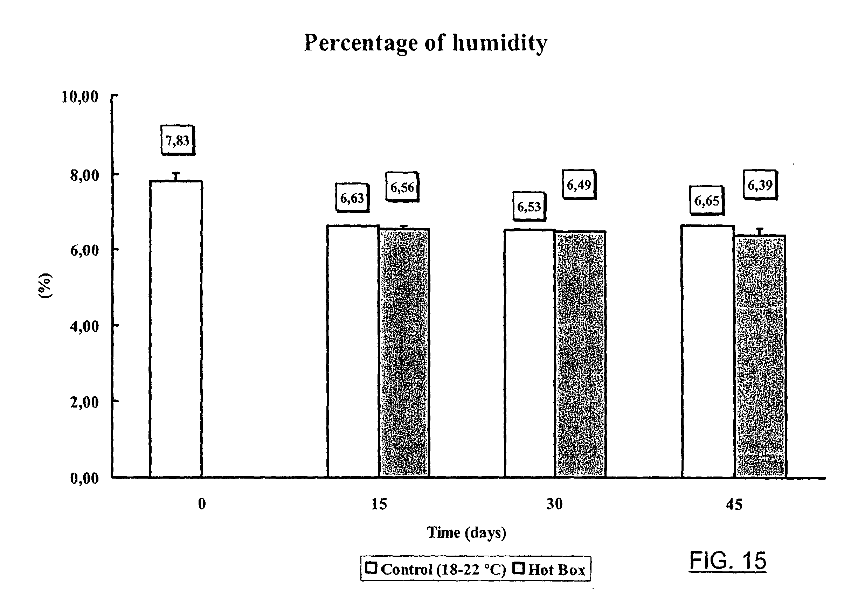

Figure 15, percentage of humidity over time,

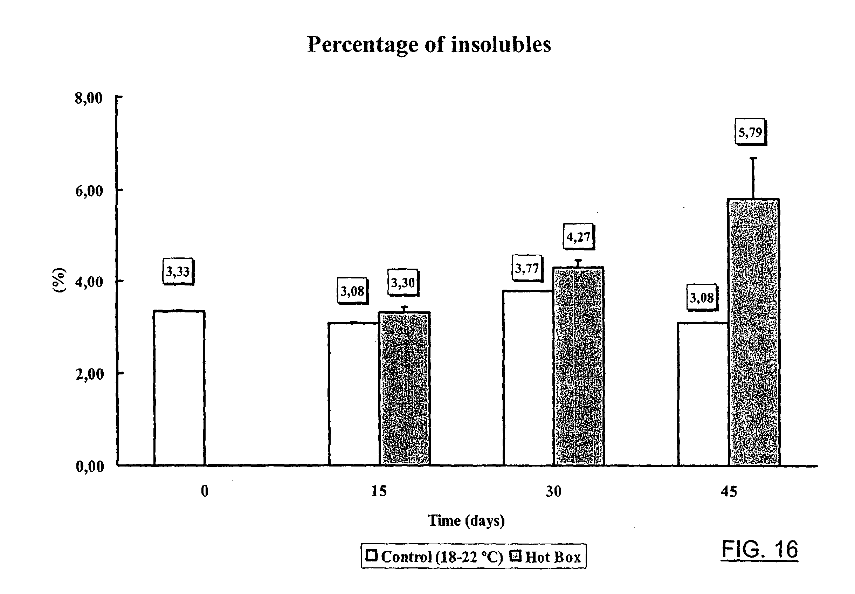

Figure 16, percentage of insolubles over time,

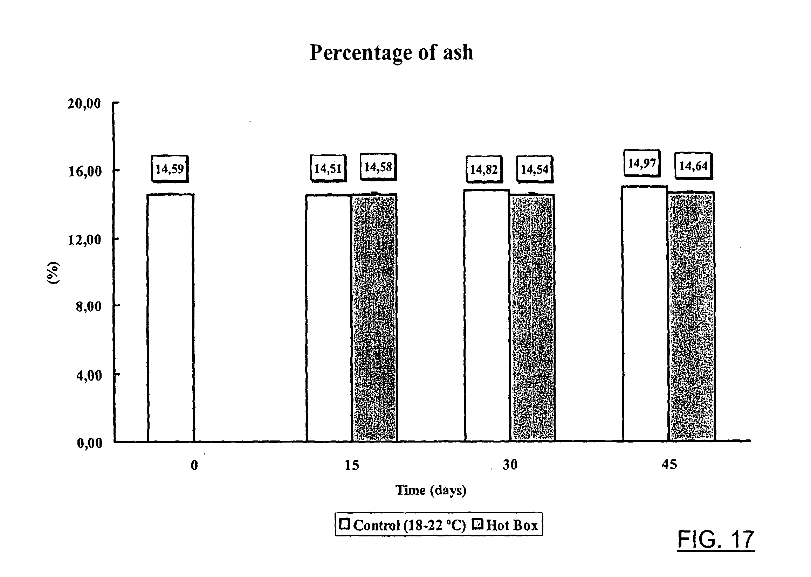

Figure 17, percentage of ash over time,

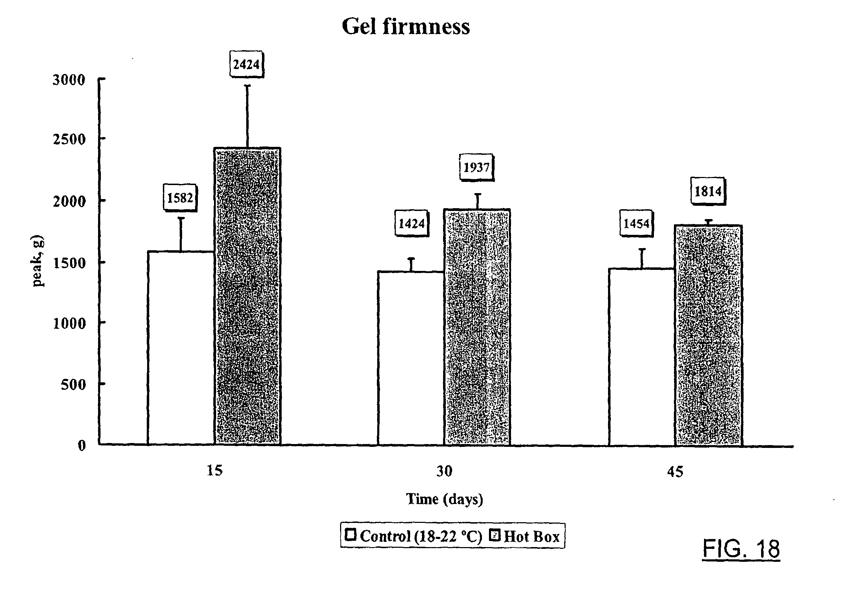

Figure 18, gel firmness over time,

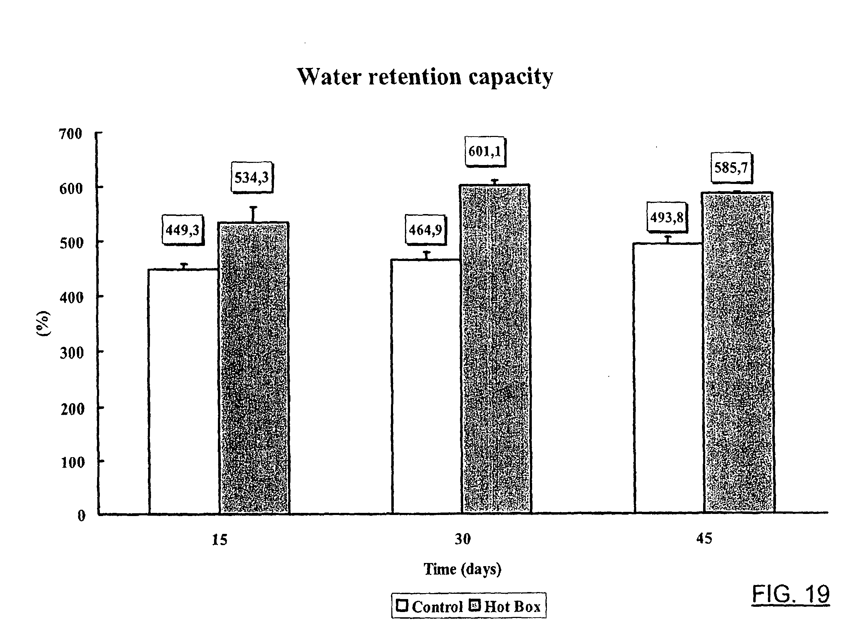

Figure 19, water retention capacity over time,

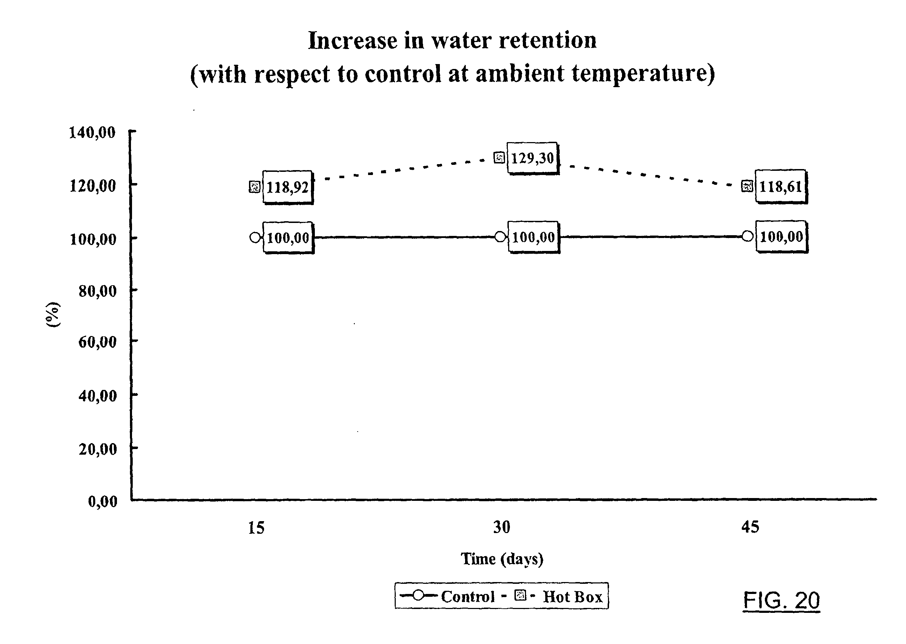

Figure 20, increase in water retention capacity over time,

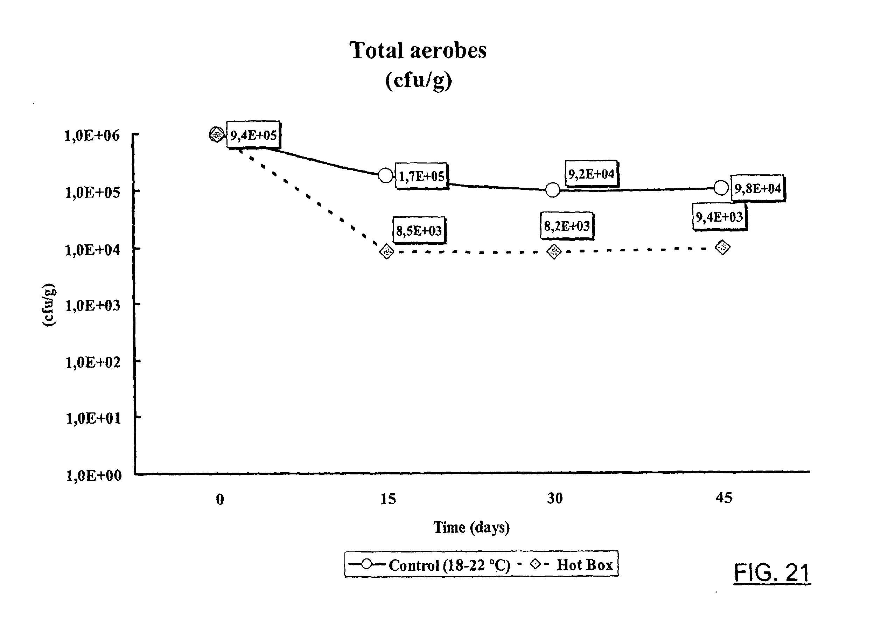

Figure 21, total aerobes over time,

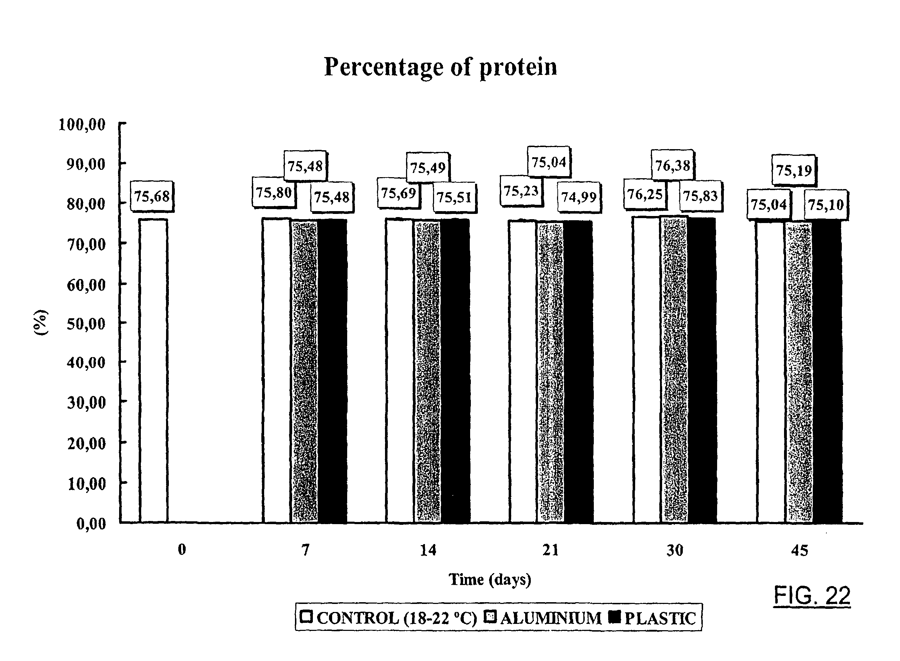

Figures 22 to 29, are graphs of the results of example 4, with spray dried animal plasma:
Figure 22, percentage of protein over time,

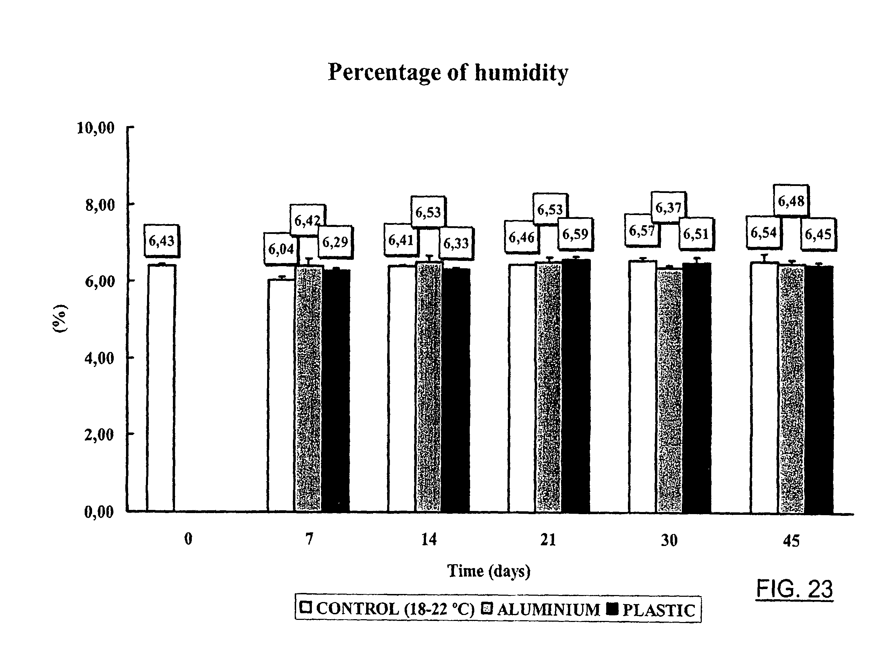

Figure 23, percentage of humidity over time,

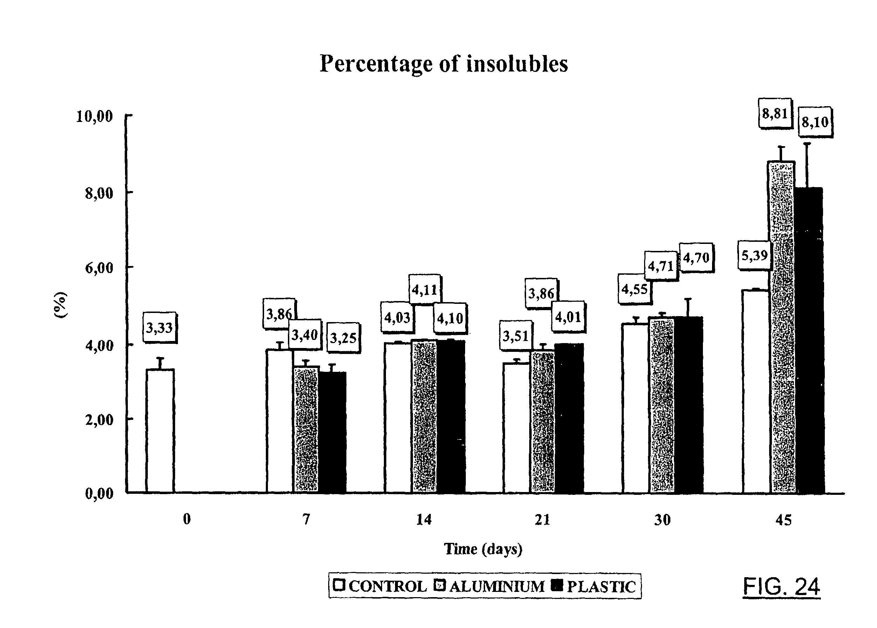

Figure 24, percentage of insolubles over time,

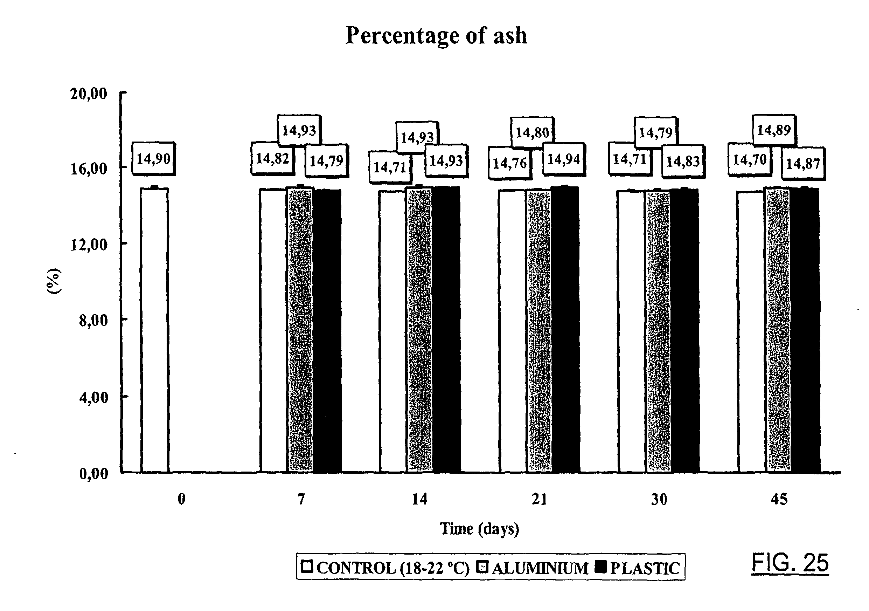

Figure 25, percentage of ash over time,

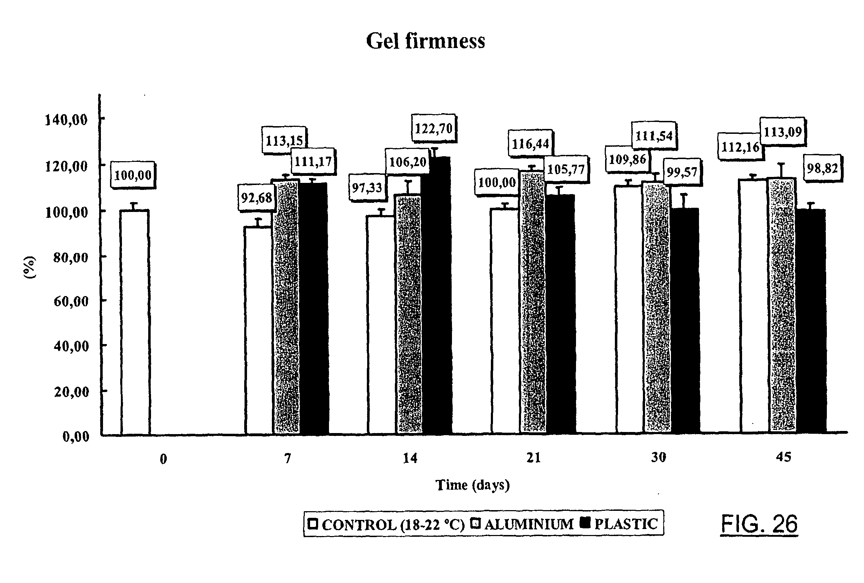

Figure 26, gel firmness over time,

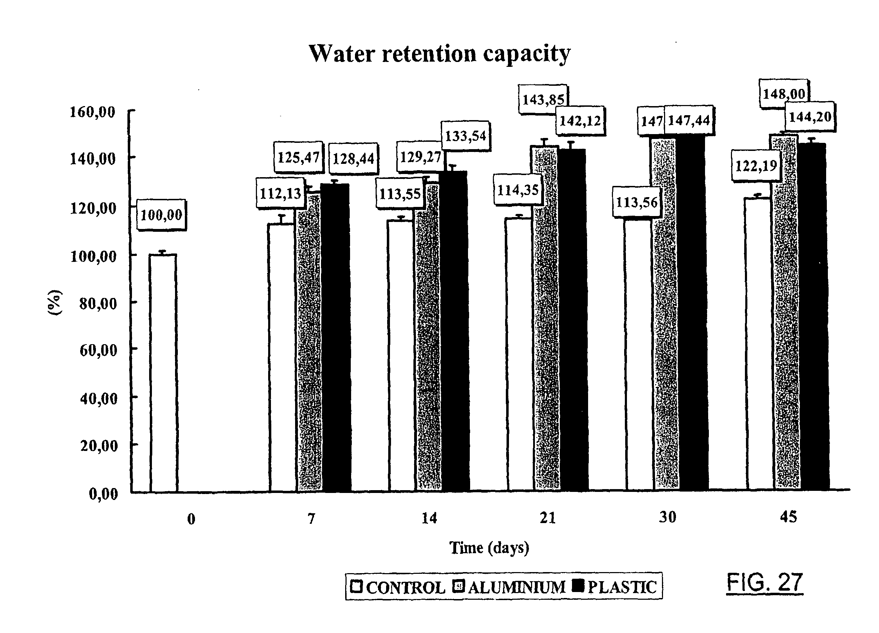

Figure 27, water retention capacity over time,

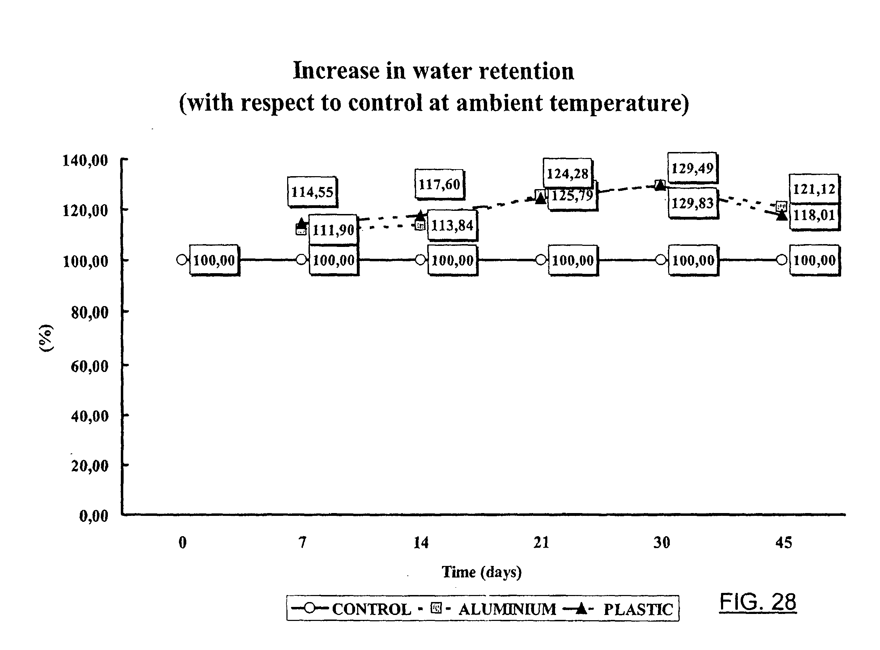

Figure 28, increase in water retention capacity over time,

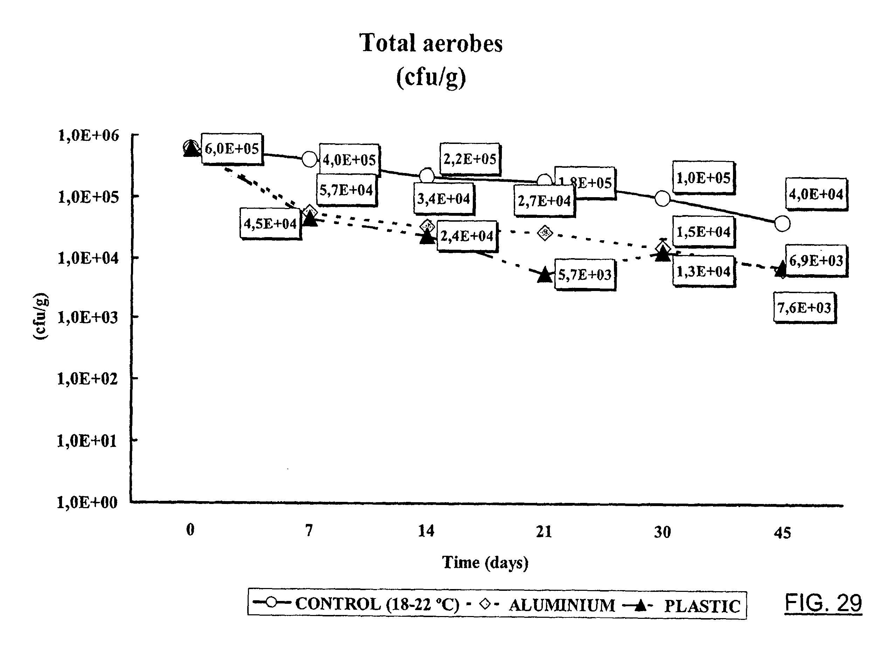

Figure 29, total aerobes over time,

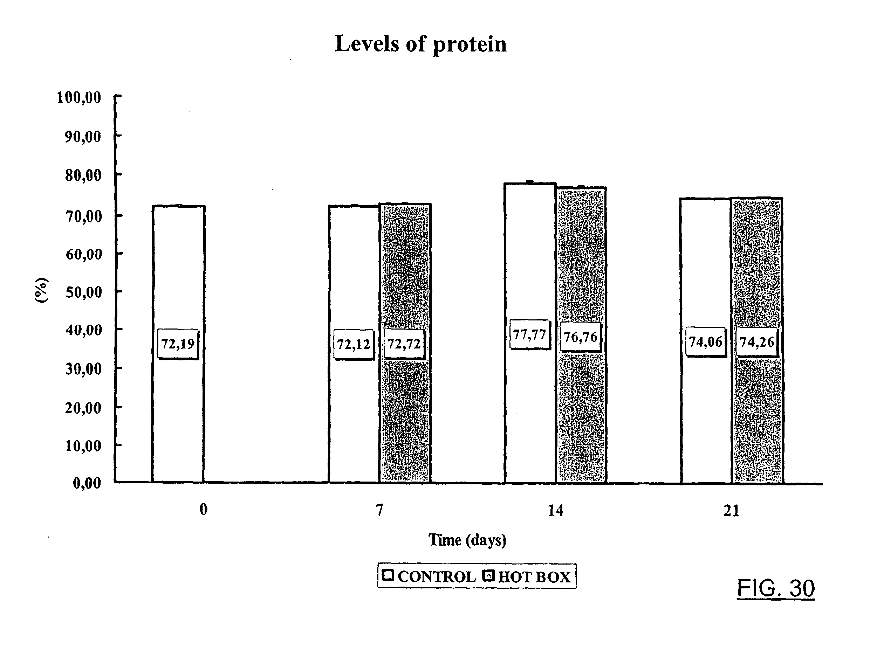

Figures 30 to 38, are graphs of the results of example 5, with spray dried animal plasma:
Figure 30, percentage of protein over time,

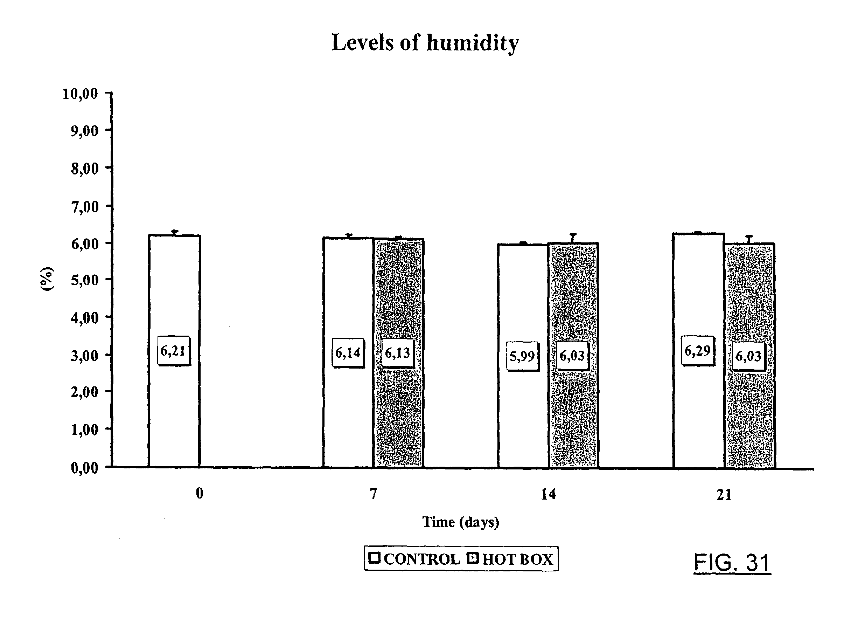

Figure 31, percentage of humidity over time,

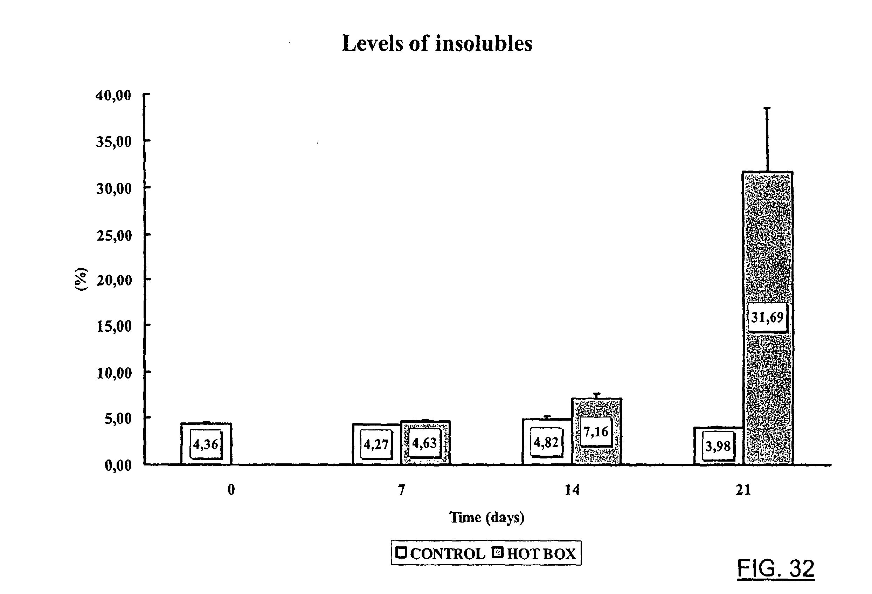

Figure 32, percentage of insolubles over time,

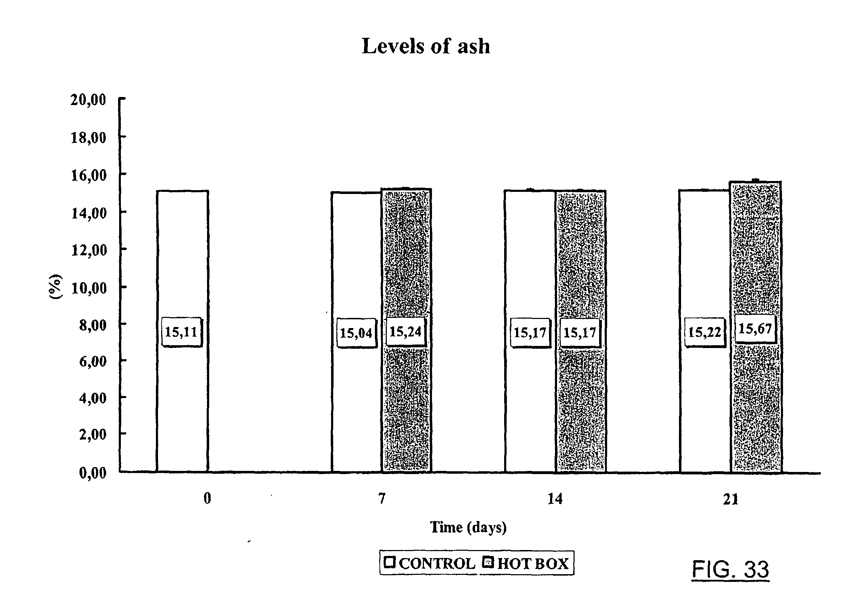

Figure 33, percentage of ash over time,

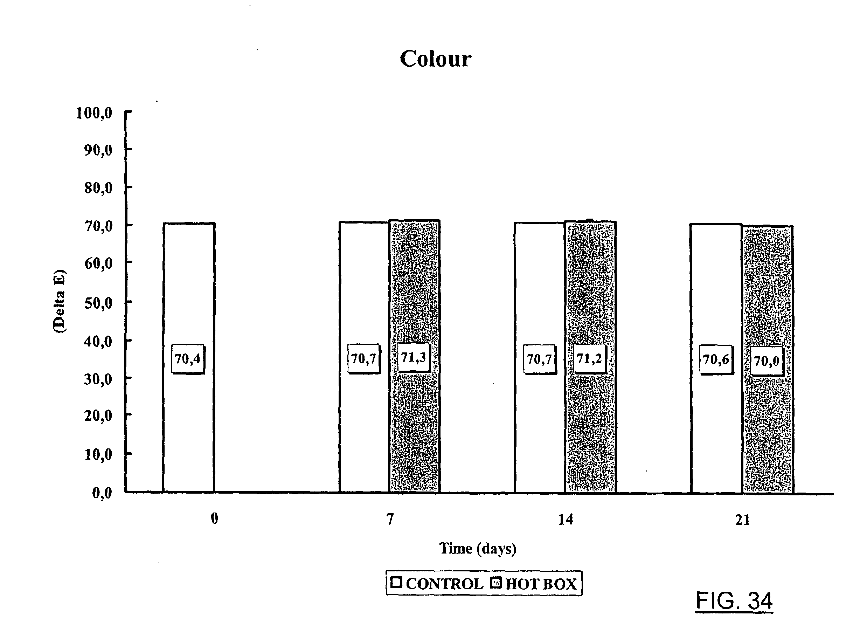

Figure 34, colour delta E over time,

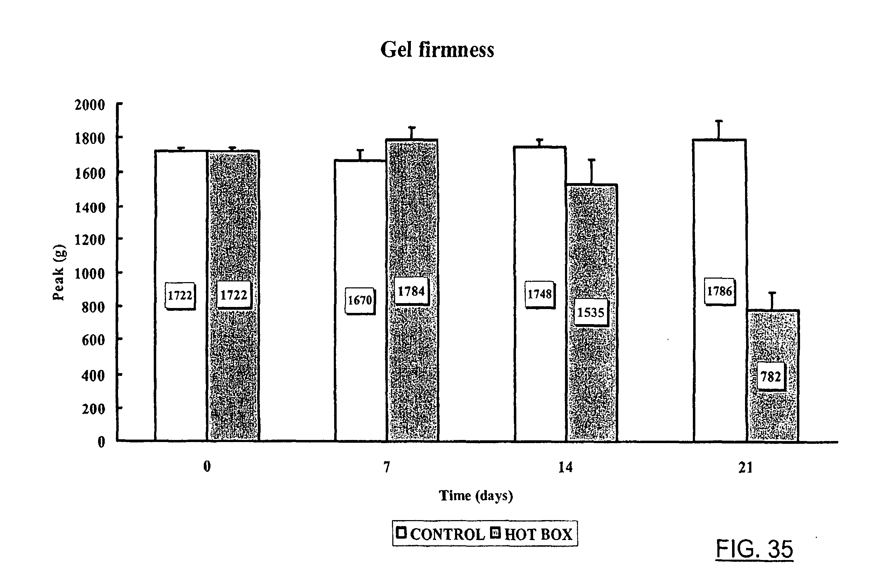

Figure 35, gel firmness over time,

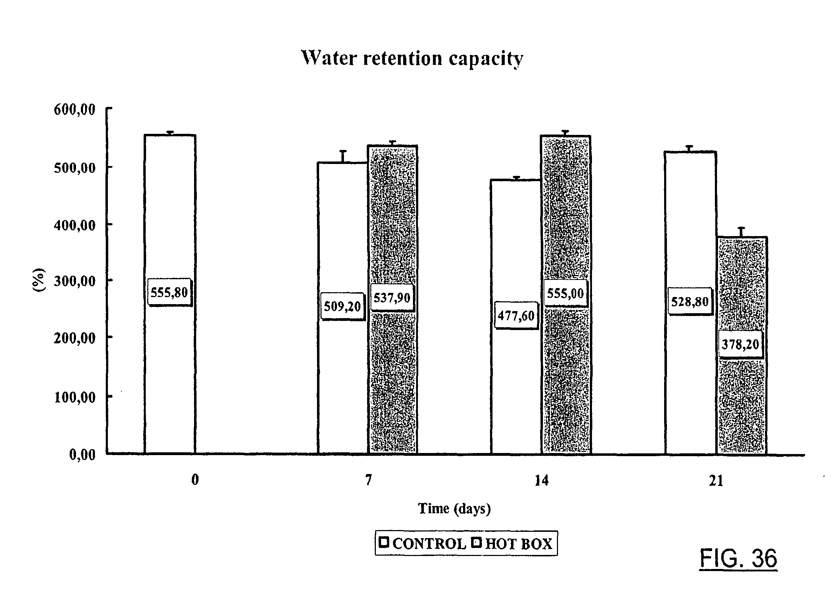

Figure 36, water retention capacity over time,

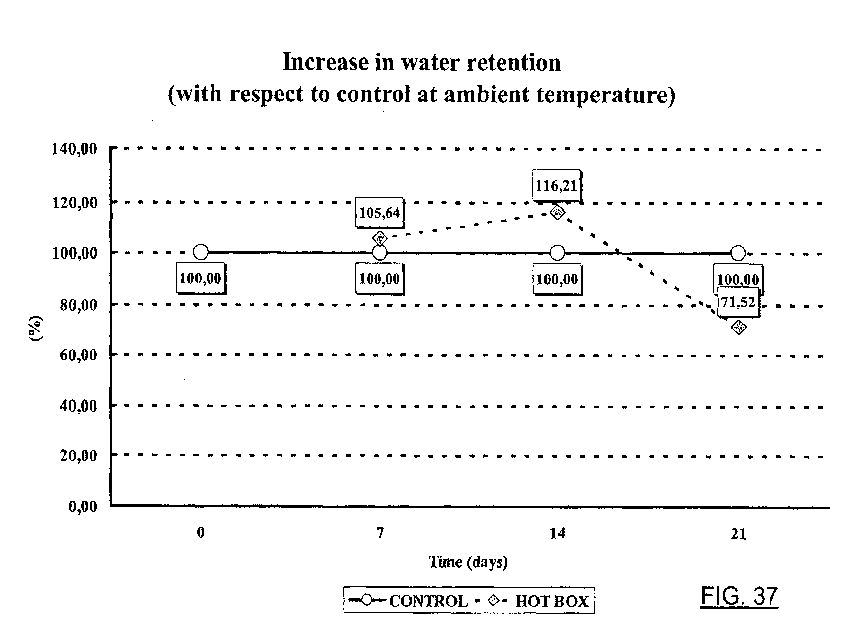

Figure 37, increase in water retention capacity over time,

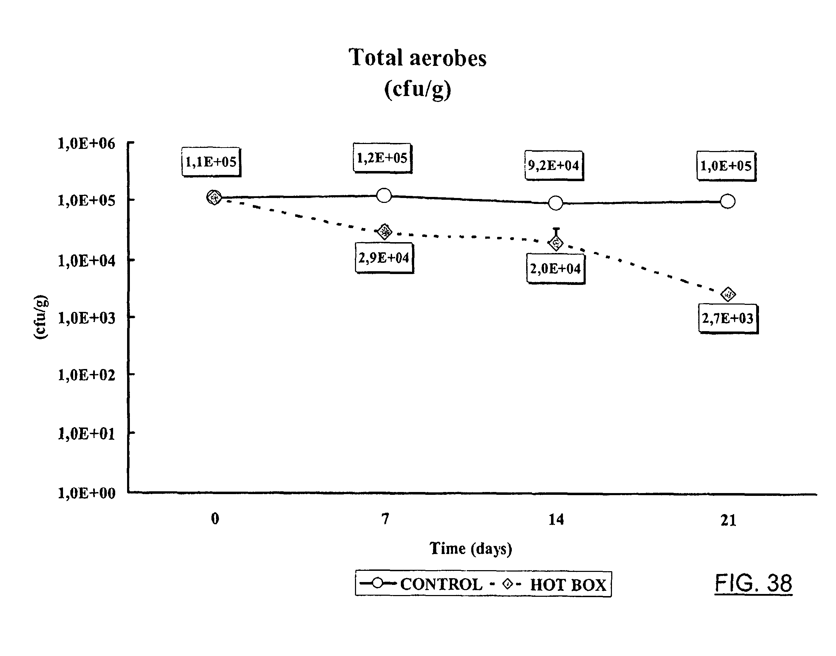

Figure 38, total aerobes over time.

### Detailed description of some embodiments of the invention

Described below are examples of packaged powdered animal blood derived products manufactured by means of methods according to the invention.

As already indicated previously there are three fundamental factors which can effect the method and the final product obtained:

### - Duration of storage.

The duration of storage of a product at a chosen temperature, can vary depending on the degree of diminution in the microbiological or bacterial charge which one wishes to obtain, or on the degree of alteration of the product. In general, the duration of storage is variable and depends on the values to be obtained.

### - Storage temperature

The control of the storage temperature is essential in achieving a diminution in the microbiological charge without altering the physicochemical parameters of the product. An excessively high temperature would negatively alter the product's properties; whilst a low temperature would not produce the effects of stress on the microbiological charge.

### - Product enveloping material

Various bags were used for the purpose, composed of two sheets of paper between which was intercalated a sheet of polyethylene (G 140) with a thickness of 35 microns high density (HDPE) and low density (LDPE); aluminium bags with one sheet of 7 microns in thickness; and plastic bags (polyethylene) having a thickness of 200 microns.

The effect of the storage temperature on the product can be dependant on the enveloping material. It could be shown that a product (powdered plasma) enveloped in mixed composition bags of paper with intercalated low density polyethylene sheet (35 microns) with a water permeability of 2.8 g/m2/day, became insoluble following 15 days at a temperature of 36°C. On the other hand, the same product enveloped in aluminium bags or plastic bags of 200 microns thickness maintained its physicochemical characteristics.

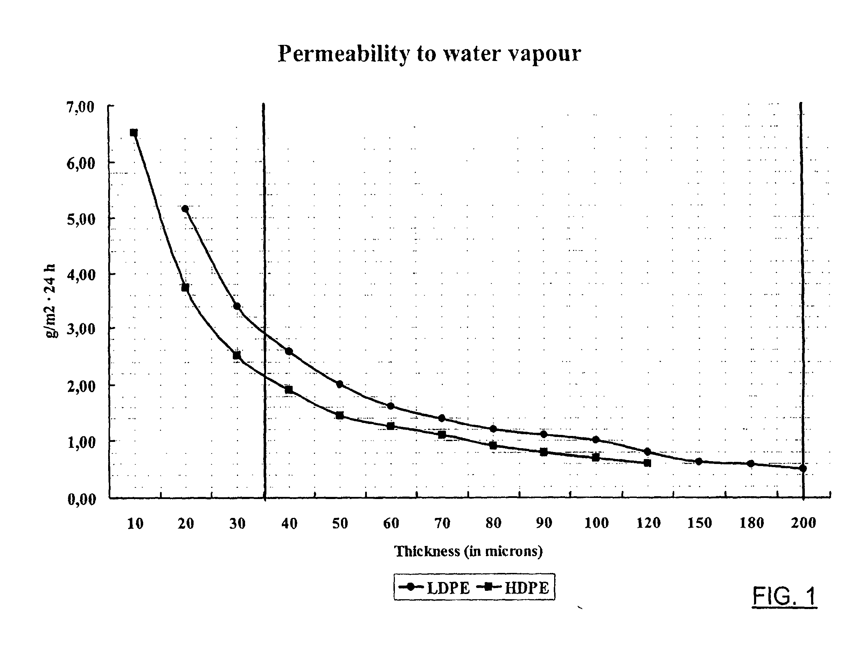

The permeability of the enveloping to humidity and gas depends, firstly, on the enveloping material and the sheet thickness of such material. Thus, for polyethylene the kinetics shown in Figure 1 are observed (thick vertical lines indicate the thickness of the polyethylene employed in the enveloping of the examples).

The permeability to water vapour of the aluminium bags is < 0.05 g/m2/day.

In general, manufacturing methods always include bagging or packaging of the product. The type of bag being determined by the product, utilising the most suitable enveloping, and by the characteristics which are expected to be obtained from the product after treatment.

Once the product has been packaged, it is placed in pallets for transport to a thermostatic room. The powdered plasma is packaged in 25 kg paper bags with intercalated polyethylene sheets, whilst another of the treated products (powdered haemoglobin) is packaged in aluminium bags of 0.5 kg and these are in turn placed in boxes with a total weight of 10 kg.

To monitor the internal temperature of the product, continuous temperature recorders were placed in different areas of the pallet which allow, either during the process or upon finalisation of the process, reading of changes in temperature over time.

Throughout the duration of the process, samples were obtained at different times to monitor the bacterial charge and other parameters.

The following examples show the assays and results obtained with two different products:
- powdered haemoglobin which, for example, is used in food colouring.
- SDAP (spray-dried animal plasma) which is pure pig plasma in powdered packaged form, used for example as a protein ingredient in delicatessen products.

### Powdered haemoglobin

This product was enveloped in aluminium bags with a capacity of 0.5 kg. The assays were performed up to 45 days to observe the effect of temperature, which was (37 ± 3°C), although finally the time for which the product is exposed to treatment shall be that which is considered most suitable.

As limits in the parameters analysed, those reflected in tables 1 and 2 have been established for this product. In the tables:
P = percentage of protein (% in weight, with respect to the product total)
H = percentage of humidity (% in weight, with respect to the product total)
I = percentage of insolubles (% in weight, with respect to the product total)
A = percentage of ash (% in weight, with respect to the product total)
(ΔE) = value of the powder colour of the final product according to the Hunter Lab colour scale
(peak, nm) = wave length expressed in nm at which the diluted product has maximum (peak) absorbency
Total count = total aerobes
cfu/g = colony forming units per gram

**TABLE 1**

| Physicochemical parameters | | | | | |
|---|---|---|---|---|---|
| P (%) | H (%) | A (%) | I (%) | Colour (ΔE) | Colour (peak, nm) |
| ≥ 62.0 | ≤ 10.0 | ≤ 10.0 | ≤ 7.0 | ≥ 18.0 | ≥ 414.0 |

**TABLE 2**

| Microbiological parameters | | | |
|---|---|---|---|
| Total count (cfu/g) | Enterobacteria (cfu/g) | Salmonella (25 g) | Clostridium SR (cfu/g) |
| ≤ 1.0 × 10⁴ | ≤ 300 | Absent | ≤ 100 |

### Example 1

The aim of this assay was to study the effect of powdered haemoglobin storage at 37°C on the microbiological charge without change in other properties. For the assay 350 kg of powdered haemoglobin, divided into 35 boxes containing 20 aluminium bags of 0.5 kg each, were subjected to the abovementioned temperature for 45 days. Samples were taken at time 0 and subsequently every 15 days. Simultaneously, samples stored at ambient temperature (18-22°C) were analysed. The samples under the example will be referred to below as "HOT BOX", whilst the samples at ambient temperature will be referred to as "CONTROL".

The results obtained were as follows:

### - physicochemical properties:

. Percentage of protein. - No changes were detected in the levels of protein in the samples treated compared with the ambient temperature controls, nor compared with the samples at time 0.

Figure 2 shows the levels of protein of the powdered haemoglobin during a 45 day assay, compared with the control.
. Percentage of humidity. - A slight increase was noted in the humidity levels of the samples treated compared with the ambient temperature controls, and compared with the samples at time 0, although such increase was not significant.

Figure 3 shows the levels of humidity of the powdered haemoglobin during a 45 day assay, compared with the control.
. Percentage of insolubility. - There was a slight increase in the percentage of insolubles in the samples treated compared with the ambient temperature controls, and compared with the samples at time 0, said percentage being below the established limits for this product. However at 45 days some of the samples displayed very high percentages of insolubles.

Figure 4 shows the levels of insolubles of powdered haemoglobin during a 45 day assay, with respect to the control. The data at 45 days is not shown since it was disordered.
. Percentage of ash. - No changes were detected in the levels of ash in the samples treated compared with the ambient temperature controls, and compared with the samples at time 0.

Figure 5 shows the levels of ash of powdered haemoglobin during a 45 day assay, with respect to the control.
. Colour. - The absorption maximum of the powdered haemoglobin thermally treated was found to be in the range of the normal limit values for this product, comparable to the value obtained in the controls.

Additionally, the colour of the product also remained in the range of the established limits for this product although, with time, a slight darkening of the powdered product was occasioned which does not affect said limits.

The following table 3 indicates the values obtained in example 1. In the tables:

A.T. = ambient temperature

**TABLE 3**

| Sample: | Time (days) | P (%) | H (%) | I (%) | A (%) | Colour (ΔE) | Colour (peak, nm) |
|---|---|---|---|---|---|---|---|
| Control | 0 | *66,20 ± 0,05* | *4,62 ± 0,05* | *1,75 ± 0,03* | *4,11 ± 0,03* | *26,6 ± 0,28* | *± 415,9 ± 0,06* |
| Sample 1 (37 °C) | 15 | *65,87 ± 0,03* | *5,77 ± 0,32* | *3,01 ± 0,59* | *4,09 ± 0,03* | *25,5 ± 0,59* | *496,4 ±0,13* |
| Sample 2 (A.T.) | 15 | *66,21 × 0,06* | *4,80 ± 0,06* | *1,65 ± 0,07* | *4,13 ± 0,08* | *26,2 ± 0,21* | *416,2 ± 0,07* |
| Sample 3 (37 °C) | 30 | *65,76 ± 0,05* | *5,74 ± 0,21* | *2,65 ± 0,58* | *4,23 ± 0,02* | *26,6 ± 0,11* | *416,5* ± *0,10* |
| Sample 4 (A.T.) | 30 | *66,01* | *4,66* | *1,34* | *4,25* | *26,8* | *416,5* |
| Sample 5 (37 °C) | 45 | *66,80 ± 0,07* | *6,86 ± 0,47* | | *4,20 ± 0,00* | *25,5 ± 1,02* | |
| Sample 6 (A.T.) | 45 | *66,68* | *5,39* | *1,32* | *4,07* | *27,2* | *416,5* |

### - Microbiological properties.

. Total aerobes. - The count of such micro-organisms when the product is subjected to the technique of thermal treatment, follows logarithmic diminution kinetics, diminishing 0.5 - 1 logarithms per week under the above described conditions. In some cases the diminution of the bacterial charge was higher than that described.

Figure 6 shows the diminution of the bacterial charge of powdered haemoglobin during a 30 day assay, with respect to the control.
. Remaining microbiological analyses. - In addition to total aerobes, enterobacteria, Coliforms, Salmonella, S. aureus, Clostridium sulphate reducers and Clostridium perfringens were analysed. All of such parameters were normally below the established limits in the initial product, but even so, were diminished by means of the technique when detected. The following table 4 shows the values obtained. In the tables:
   MPN = Most probable number

**TABLE 4**

| Sample: | Time (days) | Total Count (cfu/g) | Enterob. (cfu /g) | Coliforms (1 g) | Salmonella (25 g) | S. aureus (MPN/ g) | Clostrid. (cfu /g) | C. perfringens (cfu /g) |
|---|---|---|---|---|---|---|---|---|
| Control | 0 | *2,48 × 10*^{*6*} | *≅ 10* | *Absence* | *Absence* | *< 3* | *< 5* | *< 5* |
| Sample 1 (37°C) | 15 | *1,91 × 10*^{*4*} | *< 10* | *Absence* | *Absence* | *< 3* | *< 5* | *< 5* |
| Sample 2 (A.T.) | 15 | *1,30 × 10*^{*6*} | *≅ 10* | *Presence* | *Absence* | *< 3* | *< 5* | *< 5* |
| Sample 3 (37 °C) | 30 | *1,8 × 10*^{*4*} | *< 10* | *Absence* | *Absence* | *< 3* | *< 5* | *< 5* |
| Sample 4 (A.T.) | 30 | *8,8 × 10*^{*5*} | *60* | *Presence* | *Absence* | *< 3* | *< 5* | *< 5* |
| Sample 5 (37 °C) | 45 | *2,6 × 10*^{*3*} | *< 10* | *Absence* | *Absence* | *< 3* | *< 5* | *< 5* |
| Sample 6 (A.T.) | 45 | *2,3 × 10*^{*6*} | *5,1×10*^{*2*} | *Presence* | *Absence* | *< 3* | *< 5* | *< 5* |

### Example 2

The aim of this assay was to study the effect of powdered haemoglobin storage at 37°C on the microbiological charge without change in other properties. For the assay 5630 kg of powdered haemoglobin supplied in two separate batches divided into 16 pallets whose boxes contained 20 aluminium bags of 0.5 kg each, were subjected to the abovementioned temperature for 15 days. Samples were taken at time 0 and subsequently every week (at 7 and 15 days). The samples under the example will be referred to below as "Y1080" for the first batch and "Y1094" for the second batch, whilst the samples at ambient temperature will be referred to as "CONTROL".

The results obtained were as follows:

### - physicochemical properties:

. Percentage of protein. - No changes were detected in the levels of protein in the samples treated compared with the samples at time 0.

Figure 7 shows the levels of protein of the powdered haemoglobin during a 15 day assay.
. Percentage of humidity. - No significant changes in the humidity levels in the samples treated compared with the samples at time 0 was detected, although there was a slight increase.

Figure 8 shows the levels of humidity of the powdered haemoglobin during a 15 day assay, compared with the control.
. Percentage of insolubility. - No important differences were found in the percentage of insolubles in the samples treated compared with the samples at time 0, being within the established limits for this product.

Figure 9 shows the levels of insolubles of powdered haemoglobin during a 15 day assay, with respect to the control.
. Percentage of ash. - No changes were detected in the levels of ash in the samples treated compared with the samples at time 0.

Figure 10 shows the levels of ash of powdered haemoglobin during a 15 day assay, with respect to the control.
. Colour. - The absorption maximum of the powdered haemoglobin thermally treated was found to be in the range of the normal limit values for this product, comparable to the values obtained in the controls.

Additionally, the colour of the product remained in the range of the established limits for this product although, with time, a slight darkening of the powdered product was occasioned which does not affect said specifications. Figures 11 and 12 show the results obtained.

The following table 5 resumes mean values of the data obtained:

**TABLE 5**

| Sample: | Time (days) | P (%) | H (%) | I (%) | A (%) | Colour (ΔE) | Colour (peak, nm) |
|---|---|---|---|---|---|---|---|
| Control | 0 | 66,27 ± 0,18 | 4,74 ± 0,08 | 1,68 ± 0,15 | 4,09 ± 0,03 | 25,7 ± 0,3* | 416,0 ± 0,04 |
| Week 1 | 7 | 67,64 ± 0,29 | 5,02 ± 0,06 | 1,33 ± 0,14 | 4,03 ± 0,05 | 28,0 ± 0,6 | 416,2 ± 0,02 |
| Week 2 | 15 | 67,70 ± 0,11 | 4,92 ± 0,05 | 1,91 ± 0,11 | 4,11 ± 0,02 | 28,4 ± 0,3 | 416,3 ± 0,03 |

### - Microbiological properties.

. Total aerobes. - The count of such micro-organisms when the product is subjected to the technique of thermal treatment, follows logarithmic diminution kinetics, diminishing 0.5 - 1 logarithms per week under the above described conditions. In some cases the diminution of the bacterial charge was higher than that described.

Figure 13 shows the diminution of the bacterial charge of powdered haemoglobin during a 15 day assay, with respect to the control.
. Remaining microbiological analyses. - A diminution in Clostridium levels was noted at one week and at the end of the assay. But the enterobacteria levels did not undergo any change during the assay. The other microbiological parameters were not present at assay start. The following table 6 resumes data obtained:

**TABLE 6**

| Sample: | Time (days) | Total Count (cfu/g) | Enterob. (cfu/g) | Salmonella (25 g) | Staphylococcus (MPN/g) | Clostrid. SR (cfu/g) | C. perfringens (cfu/g) |
|---|---|---|---|---|---|---|---|
| Control | 0 | 1,92 × 10⁶ ± 3,22 × 10⁵ | ≈ 54,4 ± 21,7 | Absence | Absence | ≈ 7,9±1,2 | ≈ 5 |
| Week 1 | 7 | 4,47 × 10⁵ ± 2,73 × 10⁵ | < 10 | Absence | Absence | < 5 | ≈ 5 |
| Week 2 | 15 | 2,12 × 10⁵ ± 4,93 × 10⁴ | <50 | Absence | Absence | ≤ 5 | ≤ 5 |

### SDAP (Spray-Dried Animal Plasma)

This product was packaged: in 25 kg capacity paper bags with an inside envelope of 35 microns thickness polyethylene for the control, and in 7 microns thickness aluminium bags and 200 microns thickness polyethylene bags, for the method according to the invention. The assays were performed up to 45 days to observe the effect of temperature.

As limits in the parameters analysed, those displayed in tables 7 and 8 were established for this product:

**TABLE 7**

| Physicochemical parameters | | | | | |
|---|---|---|---|---|---|
| P (%) | H (%) | A (%) | I (%) | Colour (ΔE) | Gel firmness Peak (g) |
| ≥ 70.0 | ≤ 9.0 | ≤ 17.0 | ≤ 15.0 | ≥ 55.0 | ≥ 350.0 |

**TABLE 8**

| Microbiological parameters | | | |
|---|---|---|---|
| Total Count (cfu/g) | Enterobacteria (cfu/g) | Salmonella (25 g) | Clostridium SR (cfu/g) |
| ≤ 5.0 × 10⁴ | ≤ 300 | Absence | ≤ 100 |

In assays performed previously, it was observed that SDAP packaged in paper bags with a polyethylene envelope having a water permeability of 2.8 g/m2/day was not suitable for the method according to the invention since, although there was a diminution in the levels of microbiological charge similar to that found in other assays, the physicochemical characteristics of the products were altered. The results obtained are displayed in tables 9 and 10 below. In said tables:

Water retention = % in weight of water retained in centrifuging a thermoplastic gel obtained from a 10% plasma dissolution warmed to 90°C for 15 minutes, It is expressed in percentage of weight of water retained with respect to the product.

**TABLE 9**

| Sample: | Time (days) | P (%) | H (%) | I (%) | A (%) | Gel firmness Peak (g) | Water retention (%) |
|---|---|---|---|---|---|---|---|
| Control | 0 | 74.68 | 6.13 | 2.49 | 15.49 | 1365 ± 134 | 454.8 ± 3.7 |
| Sample 1 (37 °C) | *15* | *75.84* | *5.43* | *56.15* | *14.73* | *257 ± 1.63* | *321.4 ± 6.15* |

**TABLE 10**

| Sample: | Time (days) | Total Count (cfu/g) | Enterob. (cfu/g) | Coliforms (1 g) | Salmonella (25 g) | S. aureus (MPN/g) | Clostrid SR (cfu/g) | C. perfringens (cfu/g) |
|---|---|---|---|---|---|---|---|---|
| Control | 0 | 9.6 × 10⁵ | 10 | Absence | Presence | < 3 | 60 | 40 |
| Sample 1 (37 °C) | *15* | *4.3 × 10*^{*3*} | < *10* | *Absence* | *Absence* | < *3* | < *5* | < *5* |

As the data indicates, in the method according to the invention paper bags are not suitable for use with SDAP (at least in the concrete conditions of the assay), since although the diminution of the microbiological charge is correct, some physicochemical parameters (level of insolubles, gel firmness and water retention) are negatively affected.

For this reason SDAP was assayed with bags manufactured in other materials.

### Example 3

Prior to assays with a larger product quantity, an assay was carried out with SDAP packaged in aluminium bags.

The aim of this assay was to study the effect of SDAP storage at 37°C on the microbiological charge without change in other properties. For the assay 10 kg of SDAP, divided into 20 aluminium bags of 0.5 kg each, were subjected to the abovementioned temperature for 45 days. Samples were taken at time 0 and subsequently every 15 days. Simultaneously, samples stored at ambient temperature (18-22°C) were analysed. The samples under the example will be referred to below as "HOT BOX", whilst the samples at ambient temperature will be referred to as "CONTROL".

The results obtained were as follows:

### - physicochemical properties:

. Percentage of protein. - No changes were detected in the levels of protein in the samples treated compared with the ambient temperature controls, nor compared with the samples at time 0.

Figure 14 shows the levels of protein of the SDAP packaged in aluminium during a 45 day assay, compared with the control.
. Percentage of humidity. - No changes were detected in the humidity levels of the samples treated compared with the ambient temperature controls, nor compared with the samples at time 0.

Figure 15 shows the levels of humidity of the SDAP packaged in aluminium during a 45 day assay, compared with the control.
. Percentage of insolubility. - The insolubility percentages of the SDAP samples when treated thermally increased at 45 days.

Figure 16 shows the levels of insolubles of SDAP packaged in aluminium during a 45 day assay, with respect to the control.
. Percentage of ash. - No changes were detected in the levels of ash in the samples treated compared with the controls.

Figure 17 shows the levels of ash of SDAP packaged in aluminium during a 45 day assay, with respect to the control.
. Gel firmness. - When SDAP gels were prepared at 10% dissolution and warmed to 121°C, one could observe that the samples proceeding from the thermally treated product increase the gel firmness, compared with the ambient temperature controls and samples at time 0.

Figure 18 shows gel firmness comparing the samples packaged in aluminium with the control samples during a 45 day assay.
. Water retention capacity. - The water retention capacity of the samples thermally treated increased in comparison to the ambient temperature samples.

Figures 19 and 20 show the water retention capacity percentages of the samples packaged in aluminium compared with the ambient temperature samples during a 45 day assay, and the relative increases of the percentages with respect to the control sample (ambient temperature) for each analysis time.

Table 11 below resumes the data obtained:

**TABLE 11**

| Sample: | Time (days) | P (%) | H (%) | I (%) | A (%) | Gel firmness Peak (g) | Water retention (%) |
|---|---|---|---|---|---|---|---|
| Control | 0 | *75,23 ± 0,04* | *7,83 ± 0,20* | *3,33 ± 0,02* | *14,59 ± 0,05* | | |
| Sample 1 (37 °C) | 15 | *74,88 ± 0,06* | *6,56 ± 0,08* | *3,30 ± 0,11* | *14,58 ± 0,11* | *2424 ± 518* | *534,3 ± 29,2* |
| Sample 2 (20 °C) | 15 | *74,83 ± 0,06* | *6,63 ± 0,01* | *3,08* ± *0,01* | *14,59 ± 0,06* | *1582 ± 276* | *449,3 ± 9,6* |
| Sample 3 (37 °C) | 30 | *74,79 ± 0,04* | *6,49 ± 0,01* | *4,27 ± 0,16* | *14,54 ± 0,09* | *1937 ± 122* | *601,1 ± 9,5* |
| Sample 4 (20 °C) | 30 | *74,86* | *6,53* | *3,77* | *14,82* | *1424 ± 106* | *464,9 ± 14,3* |
| Sample 5 (37°C) | 45 | *75,80 ±0,06* | *6,39 ±0,19* | *5,79 ± 0,86* | *14,65 ± 0,05* | *1814 ± 40* | *585,7 ± 3,7* |
| Sample 6 (20°C) | 45 | *75,85* | *6,65* | *3,08* | *14,97* | *1454 ± 161* | *493,8 ± 11,8* |

### - Microbiological properties.

. Total aerobes. - The count of such micro-organisms when the product is subjected to the technique of thermal treatment, follows logarithmic diminution kinetics, diminishing 0.5 - 1 logarithms per week under the above described conditions. In some cases the diminution of the bacterial charge was higher than that described.

Figure 21 shows the diminution of the bacterial charge of SDAP during a 45 day assay, with respect to the control.
. Remaining microbiological analyses. - In addition to total aerobes, enterobacteria, Coliforms, Salmonella, S. aureus, Clostridium sulphate reducers and Clostridium perfringens were analysed. All of such parameters were normally below the established limits in the initial product, but even so, were diminished by means of the technique when detected. The following table 12 shows the values obtained.

**TABLE 12**

| Sample: | Time (days) | Total Count (cfu/g) | Enterob. (cfu/g) | Coliforms (1 g) | Salmonella (25 g) | S. aureus (MPN/ g) | Clostrid SR (cfu/g) | C. perfringens (cfu/g) |
|---|---|---|---|---|---|---|---|---|
| Control | 0 | *9,4 × 10*^{*5*} | *< 10* | *Absence* | *Absence* | *< 3* | *< 5* | *< 5* |
| Sample 1 (37 °C) | 15 | *8,5 × 10*^{*3*} | *< 10* | *Absence* | *Absence* | *< 3* | *< 5* | *< 5* |
| Sample 2 (20°C) | 15 | *1,7 × 10*^{*5*} | *< 10* | *Absence* | *Absence* | *< 3* | *< 5* | *< 5* |
| Sample 3 (37 °C) | 30 | *8,2 × 10*^{*3*} | *< 10* | *Absence* | *Absence* | *< 3* | *≅15* | *< 5* |
| Sample 4 (20 °C) | 30 | *9,2 × 10*^{*4*} | *< 10* | *Absence* | *Absence* | *< 3* | *< 5* | *< 5* |
| Sample 5 (37 °C) | 45 | *9,1 × 10*^{*3*} | *< 10* | *Absence* | *Absence* | *< 3* | *< 5* | *< 5* |
| Sample 6 (20°C) | 45 | *9,8 × 10*^{*4*} | *< 10* | *Absence* | *Absence* | *< 3* | *< 5* | *< 5* |

### Example 4

The aim of this assay was to study the effect of SDAP storage at 37°C on the microbiological charge without change in other properties. For the assay SDAP in 15 aluminium bags of 7 microns thickness (10 kg) and 15 bags of polyethylene of 200 microns thickness (10 kg), were subjected to the abovementioned temperature for 45 days. Samples were taken at time 0 and subsequently every 15 days. Samples stored at ambient temperature (18-22°C) in current bags with a polyethylene sheet of 35 microns thickness were simultaneously analysed. In the example the sample batch packaged in aluminium bags will be referred to below as "ALUMINIUM", and the batch packaged in 200 micron polyethylene bags will be referred to as "PLASTIC", whilst the samples at ambient temperature will be referred to as "CONTROL".

The results obtained were as follows:

### - physicochemical properties:

. Percentage of protein. - No changes were detected in the levels of protein in the samples treated compared with the ambient temperature controls, nor compared with the samples at time 0.

Figure 22 shows the levels of protein of the SDAP packaged in aluminium and in polyethylene during a 45 day assay, compared with the initial control and the control at ambient temperature packaged in paper bags with polyethylene sheet.
. Percentage of humidity. - No changes were detected in the humidity levels of the samples treated compared with the ambient temperature controls, nor compared with the samples at time 0.

Figure 23 shows the levels of humidity of SDAP packaged in aluminium and in polyethylene during a 45 day assay, compared with the initial control and the control at ambient temperature packaged in paper bags with polyethylene sheet
. Percentage of insolubility. - The insolubility percentages of the SDAP samples packaged in paper bags with polyethylene sheet, when treated thermally demonstrated increased insolubility percentages to levels higher than the established limits for this product. Thus, a sample treated at 37°C for 15 days in this type of bag reached levels of insolubility in excess of 50%. An increase in percentage of insolubles was also observed at 45 days when the product was packaged in aluminium or polyethylene bags.

Figure 24 shows the levels of insolubles of SDAP packaged in aluminium and in polyethylene during a 45 day assay, with respect to the initial control and the control at ambient temperature packaged in paper bags with polyethylene sheet.
. Percentage of ash. - No changes were detected in the levels of ash in the samples treated compared with the ambient temperature controls, nor compared with the samples at time 0.

Figure 25 shows the levels of ash of SDAP packaged in aluminium and in polyethylene during a 45 day assay, with respect to the initial control and the control at ambient temperature packaged in paper bags with polyethylene sheet.
. Gel firmness. - When SDAP gets were prepared at 10% dissolution and warmed to 121°C, one could observe that the samples proceeding from the thermally treated product have increased gel firmness, compared with the ambient temperature controls and samples at time 0.

Figure 26 shows the percentages of gel firmness increase comparing the samples packaged in aluminium or polyethylene with respect to the ambient temperature samples in paper bags with polyethylene sheet and samples at time 0 during a 45 day assay.
. Water retention capacity. - The water retention capacity in the samples thermally treated (both samples proceeding from aluminium bags, and samples from polyethylene bags) increased in comparison to the ambient temperature samples and at time 0.

Figures 27 and 28 show the relative percentages of water retention capacity of the samples packaged in aluminium or in polyethylene compared with the ambient temperature samples in paper bags with polyethylene sheet and samples at time 0 during a 45 day assay. They show percentages with respect to assay start as well as the difference with respect to the control sample (ambient temperature) for each time.

Table 13 below resumes the data obtained:

**TABLE 13**

| Sample: | Time (days) | P (%) | H (%) | I (%) | A (%) | Colour (ΔE) | Gel Firmness Peak (g) | Water retention (%) |
|---|---|---|---|---|---|---|---|---|
| Control | 0 | *75,68 ± 0,02* | *6,43 ± 0,04* | *3,33 ± 0,30* | *14,90 ± 0,14* | *67,2 ± 0,3* | *1612 ± 52* | *395,00 ± 6,52* |
| Control | 7 | *75,80 ± 0,07* | *6,04 ± 0,09* | *3,86 ± 0,19* | *14,82 ±0,05* | *65,9 ± 0,4* | *1494 ± 53* | *442,90 ± 14,84* |
| Aluminium | 7 | *75,47 ± 0,07* | *6,42 ± 0,19* | *3,40 ± 0,17* | *14,93 ± 0,14* | *67,1 ± 0,3* | *1824 ± 32* | *495,60 ± 9,16* |
| Plastic | 7 | *75,48 ± 0,07* | *6,29 ± 0,07* | *3,25 ± 0,21* | *14,79 ± 0,04* | *67,6 ± 0,2* | *1792 ± 35* | *507,34 ± 6,54* |
| Control | 15 | *75,69 ± 0,11* | *6,49 ± 0,04* | *4,03 ± 0,04* | *14,71 ± 0,03* | *66,8 ± 0,7* | *1569 ± 43* | *448,52 ± 6,97* |
| Aluminium | 15 | *75,49 ± 0,04* | *6,53 ± 0,15* | *4,11 ± 0,03* | *14,93 ± 0,12* | *67,7 ± 0,5* | *1712 ± 98* | *510,60 ± 8,75* |
| Plastic | 15 | *75,51 ± 0,06* | *6,33 ± 0,04* | *4,10 ± 0,04* | *14,93 ± 0,02* | *68,6 ± 0,6* ^{*a*} | *1978 ± 68* | *527,47 ±* 9,84 |
| Control | 21 | *75,23 ± 0,14* | *6,46 ± 0,01* | *3,51 ± 0,10* | *14,76 ± 0,02* | *66,2 ± 0,1* | *1612 ± 40* | *451,70 ± 4,29* |
| Aluminium | 21 | *75,04 ± 0,05* | *6,53 ± 0,11* | *3,86 ± 0,16* | *14,80 ± 0,04* | *66,9 ± 0,3* | *1877 ± 33* | *568,20 ± 11,68* |
| Plastic | 21 | *74,99 ± 0,06* | *6,59 ± 0,08* | *4,01 ± 0,09* | *14,94 ± 0,08* | *69,6 ± 0,2* ^{*a*} | *1705 ± 59* | *561,39 ± 12,50* |
| Control | 30 | *76,25 ± 0,08* | *6.57 ± 0,07* | *4,55 ± 0,16* | *14,71 ± 0,11* | *66,6 ± 0,6* | *1771 ± 39* | *448,58 ± 10,49* |
| Aluminium | 30 | *76,38 ± 0,15* | *6,37 ± 0,08* | *4,71 ± 0,09* | *14,79 ± 0,08* | *66,1 ± 0,6* | *1798 ± 59* | *580,86 ± 13,21* |
| Plastic | 30 | *75,83 ± 0,04* | *6,51 ± 0,13* | *4,70 ± 0,47* | *14,83 ± 0,06* | *69,2 ± 0,3* ^{*a*} | *1734 ± 83** | *582,37 ± 6,78* |
| Control | 45 | *75,04 ± 0,05* | *6,54 ± 0,20* | *5,39 ± 0, 05* | *14,70 ± 0,00* | *66,4 ± 0,4* | *1808 ± 39* | *482,64* ± *4,51* |
| Aluminium | 45 | *75,19 ± 0,04* | *6,48 ± 0,11* | *8,81 ± 0,38* | *14,89 ± 0,04* | *66,1 ± 0,4* | *1823 ± 103* | *584,59 ± 5,49* |
| Plastic | 45 | *75,10 ± 0,05* | *6,45 ± 0,08* | *8,10* ± *1,16* | *14,87 ± 0,05* | *68,8 ± 0,4* | *1593 ± 54* | *569,58 ± 9,08* |

### - Microbiological properties.

. Total aerobes. - The count of such micro-organisms when the product is subjected to the technique of thermal treatment, follows logarithmic diminution kinetics, diminishing 0.5 - 1 logarithms per week under the above described conditions. In some cases the diminution of the bacterial charge was higher than that described.

Figure 29 shows the diminution of the bacterial charge of SDAP during a 45 day assay, with respect to the ambient temperature control and samples at time 0.
. Remaining microbiological analyses. - In addition to total aerobes, enterobacteria, Coliforms, Salmonella, S. aureus, Clostridium sulphate reducers and Clostridium perfringens were analysed. All of such parameters were normally below the established limits in the initial product, but even so, were diminished by means of the technique when detected. The following table 14 shows the values obtained.

**TABLE 14**

| Sample: | Time (days) | Total Count (cfu/g) | Enterob. (cfu/g) | Salmonella (25 g) | S. aureus (MPN/g) | Clostridium SR (cfufg) | C. perfringens (cfu/g) |
|---|---|---|---|---|---|---|---|
| Control | 0 | *6,0 × 10*^{*5*} *± 2,5 × 10*^{*4*} | *< 10* | *Absence* | *Absence* | *< 5* | *< 5* |
| Control | 7 | *4,0 × 10*^{*5*} *± 6,5 × 10*^{*4*} | *≈10* | *Absence* | *Absence* | *< 5* | *≈ 10* |
| Aluminium | 7 | *5,7 × 10*^{*4*} *± 5,9 × 10*^{*3*} | *< 10* | *Absence* | *Absence* | *< 5* | *8.3* ± *4.1* |
| Plastic | 7 | *4,5 × 10*^{*4*} *± 9,4 × 10*^{*3*} | *<10* | *Absence* | *Absence* | *< 5* | *< 5* |
| Control | 15 | *2,2 × 10*^{*5*} *± 7,1 × 10*^{*4*} | *< 10* | *Absence* | *Absence* | *< 5* | *8.3 ± 2.0* |
| Aluminium | 15 | *3,4 × 10*^{*4*} *± 7,2 × 10*^{*3*} | *< 10* | *Absence* | *Absence* | *< 5* | *≈ 5* |
| Plastic | 15 | *2,4 × 10*^{*4*} *± 7,4 × 10*^{*3*} | *< 10* | *Absence* | *Absence* | *< 5* | *≈ 5* |
| Control | 21 | *1,8 × 10*^{*5*} *± 1,4 × 10*^{*4*} | *< 10* | *Absence* | *Absence* | *< 5* | *10* |
| Aluminium | 21 | *2,7 × 10*^{*4*} *± 5,4 × 10*³ | *< 10* | *Absence* | *Absence* | *< 5* | *10* |
| Plastic | 21 | *5,7 × 10*^{*3*} *± 2,2 × 10*^{*2*} | *< 10* | *Absence* | *Absence* | *< 5* | *< 5* |
| Control | 30 | *1,0 × 10*^{*5*} *± 1,2 × 10*^{*4*} | *< 10* | *Absence* | *Absence* | *≈ 5* | *< 5* |
| Aluminium | 30 | *1,5 × 10*^{*4*} *± 6,6 × 10*^{*3*} | *< 10* | *Absence* | Absence | *< 5* | < *5* |
| Plastic | 30 | *1,3 × 10*^{*4*} ± *4,6 × 10*^{*3*} | *< 10* | *Absence* | *Absence* | *< 5* | *< 5* |
| Control | 45 | *4,0 × 10*^{*4*} *± 7,5 × 10*^{*3*} | *<10* | *Absence* | *Absence* | *8.3 ± 2.0* | *8.3 ± 2.0* |
| Aluminium | 45 | *6,9 × 10*^{*3*} *± 1,3 × 10*^{*3*} | < 10 | *Absence* | *Absence* | *< 5* | *< 5* |
| Plastic | 45 | *7,6 × 10*^{*3*} *± 2,7 × 10*^{*3*} | *< 10* | *Absence* | *Absence* | *< 5* | *< 5* |

### Example 5

The aim of this example is to show the results obtained subjecting the SDAP product to a temperature of 45°C. For such, 15 aluminium bags of 0.5 kg each were subjected to a temperature of 45°C for an indeterminate period of time. The SDAP production batch from which these samples were taken had an initially high microbiological charge. Samples were taken every seven days to analyse the development over time of the bacterial charge and the other physicochemical properties. These samples will be referred to as "HOT BOX". In addition samples were taken of the SDAP product stored at ambient temperature also packaged in aluminium bags referred to as "CONTROL". The assay was brought to an end at 21 days since the level of insolubles reached unacceptable levels, as will be shown below. The results obtained were as follows:

### - physicochemical properties:

Table 15 resumes the results obtained in this assay.

**TABLE 15**

| Sample | Time (days) | P (%) | H (%) | I (%) | A (%) | Gel (ΔE) | Colour Firmness Peak (g) | Water retention (%) |
|---|---|---|---|---|---|---|---|---|
| Control | | 74.53 | 6.57 | 7.22 | 14.74 | 69.8 | 711 | --- |
| *Hot-Box* | *0* | *72.19 ± 0.09* | *6.21 ± 0.12* | *4.36 ± 0.14* | *15.11 ± 0.01* | *70.4 ± 0.2* | *1722 ± 20* | *555.8 ± 5.4* |
| *Control* | *7* | *72.12 ± 0.11* | *6.14 ± 0.10* | *4.27 ± 0.01* | *15.04 ± 0.01* | *70.7 ± 0.0* | *1670 ± 60* | *509.2 ± 19.5* |
| *Hot-Box* | *7* | *72.72 ± 0.13* | *6.13 ± 0.06* | *4.63 ± 0.11* | *15.24 ± 0.06* | *71.3 ± 0.0* | *1784 ± 73* | *537.9 ± 6.8* |
| *Control* | *15* | *77.77 ± 0.57* | *5.99 ± 0.06* | *4.82 ± 0.40* | *15.17 ± 0.06* | *70.7 ± 0.0* | *1748 ± 39* | *477.6 ± 6.2* |
| *Hot-Box* | *15* | *76.74 ± 0.42* | *6.03 ± 0.23* | *7.16 ± 0.50* | *15.17 ± 0.02* | *71.2 ± 0.3* | *1535 ± 140* | *555.0 ± 8.5* |
| *Control* | *21* | *74.06 ± 0.01* | *6.29 ± 0.04* | *3.98 ± 0.09* | *15.22 ± 0.01* | *70.6 ± 0.0* | *1786 ± 113* | *528.8 ± 9.3* |
| *Hot-Box* | *21* | *74.26 ± 0.16* | *6.03 ± 0.20* | *31.69 ± 6.75* | *15.67 ± 0.09* | *70.0 ± 0.2* | *782 ± 107* | *378.2 ± 17.4* |

Figures 30 to 37 display the results obtained in graph format.

### - Microbiological properties

Table 16 below resumes the data obtained in the microbiological analysis:

**TABLE 16**

| Sample | Time (day) | Total Count (cfu/g) | Clostridium SR (cfu/g) |
|---|---|---|---|
| Control | | 7.6 × 10⁶ | 4490 |
| *Hot-Box* | *0* | *1.1 × 10*^{*5*} *± 1.1 × 10*^{*4*} | *≈ 13* |
| *Control* | *7* | *1. 2 × 10*^{*5*} *± 2.0 × 10*^{*4*} | *180 ± 60* |
| *Hot-Box* | *7* | *2.9 × 10*^{*4*} *± 7.0 × 10*^{*3*} | *33.3 ± 10.8* |
| *Control* | *15* | *9.2 × 10*^{*4*} *± 8.0 × 10*^{*3*} | *100 ± 0* |
| *Hot-Box* | *15* | *2.0 × 10*^{*4*} *± 1.4 × 10*^{*4*} | *< 10* |
| *Control* | *21* | *1.0 × 10*^{*5*} *± 9.0 × 10*^{*3*} | *15 ± 5* |
| *Hot-Box* | *21* | *2.7 × 10*^{*3*} *± 3.9 × 10*^{*2*} | *< 10* |

Figure 38 shows, in graph form, the results obtained.

Table 17 below displays the percentage of microbiological diminution, considering total aerobes.

**TABLE 17**

| PERCENTAGE OF MICROBIOLOGICAL DIMINUTION | | | | | |
|---|---|---|---|---|---|
| | 7 d. | 14 d. | 21 d | 30 d. | 45 d. |
| Control | 0 | 16.36 | 9.09 | --- | --- |
| Aluminium | 73.64 | 81.82 | 97.55 | --- | --- |

As may be observed, at 7 days of treatment, the SDAP did not show differences in percentage of protein, humidity, insolubles and ash with respect to the control bags. The bags treated at 45°C seem to have a slightly lighter colour than the control. Likewise one notes an increase in gel firmness and in water retention capacity. With respect to the microbial contamination, one may note that the control samples maintain their contamination level whilst the SDAP subjected to thermal treatment has a diminution in total aerobes equal to 1 logarithmic unit. Similarly a clostridium reduction can be observed.

After 14 days of treatment the SDAP did not show any differences in percentage of protein, humidity, and ash level between the bags treated and the control. but an increase in the percentage of insolubles was observed. Likewise it seems that the treated SDAP has a lighter colour than the control. An increase in the water retention capacity with respect to the control was also observed. On the contrary, gel firmness was reduced, probably due to the increase in percentage of insolubles. As concerns the bacterial charge the control SDAP practically maintained the level of contamination, with a slight reduction in the level of total aerobes and with maintained clostridium values. With respect to the SDAP subjected to thermal treatment a reduction in bacterial contamination was observed. The clostridium values were diminished to below the detection level.

After 21 days of treatment, the treated SDAP did not show any differences in percentage of protein, humidity, and ash with respect to the control SDAP. However a significant increase in the percentage of insolubles was observed, causing the product to fail to comply with specifications. The colour had also changed, to a light brown. Probably due to the percentage levels of insolubles, both gel firmness and water retention capacity had lowered. With respect to bacterial contamination, the control SDAP maintained its contamination whilst the SDAP thermally treated diminished its bacteriological charge in relation to total aerobes. The remaining microbiological values maintained their levels.

### Example 6

The aim of this assay was to study the effect of powdered haemoglobin storage at 58°C on the microbiological charge and physicochemical parameters. For such, 3 boxes of 20 kg each, divided into 1 kg aluminium bags with water permeability of 0.05 g/m2/day, were subjected to said temperature for one week. Samples were taken at time 0 and subsequently every twelve hours.

The results were as follows:

### - Physicochemical properties

At three days of treatment, changes in the percentage of insolubles were detected such that the product could not dissolve in water; whilst other physicochemical properties were not altered with respect to the initial specification values of the product.

Table 17 resumes the data obtained:

**TABLE 17**

| Time (hours) | P (%) | H (%) | A (%) | I (%) | Colour (ΔE) | Colour (peak, nm) |
|---|---|---|---|---|---|---|
| **0** | 65.53 | 4.93 | 4.28 | 3.45 | 27.06 | 416.4 |
| **12** | 65.05 | 4.69 | 4.20 | 3.06 | 27.21 | 416.5 |
| **24** | 64.98 | 4.81 | 4.21 | 3.17 | 27.49 | 416.6 |
| **36** | 64.86 | 5.07 | 4.14 | 4.11 | 27.83 | 416.4 |
| **48** | 64.97 | 5.03 | 4.14 | 3.98 | 27.73 | 415.6 |
| **60** | 65.09 | 5.80 | 4.12 | 4.79 | 27.79 | 416.6 |
| **72** | 65.11 | 5.99 | 3.75 | 4.29 | 27.93 | 416.8 |
| **84** | 65.12 | 6.65 | 4.14 | 55.27 | 23.87 | Insoluble |
| **96** | 65.02 | 6.88 | 4.17 | 63.76 | 24.04 | Insoluble |
| **108** | 64.95 | 6.87 | 3.73 | 67.43 | 21.72 | Insoluble |

### - Microbiological properties

The microbiological results show differences between the samples during the process. A clear reduction in total count was observed as from 24 hours.

Table 18 displays the results obtained:

**TABLE 18**

| Time (hours) | Total count (cfu/g) | Enterobacteria (cfu/g) | Salmonella (25 g) | Clostridium SR (cfu/g) |
|---|---|---|---|---|
| **0** | 1.18 × 10⁶ | < 10 | Absence | < 10 |
| **12** | 3.40 × 10⁵ | --- | --- | --- |
| **24** | 2.80 × 10³ | --- | ---- | --- |
| **36** | 1.40 × 10³ | --- | ---- | --- |

### Example 7

The aim of this assay was to study the effect of SDAP storage at 37°C on the microbiological charge without change in other properties. For the assay 10 paper bags with a 35 micron sheet of high density polyethylene (gauge 140) and 2.1 g/m2/day water permeability (25 kg) were subjected to the above temperature for 2 weeks.

The results obtained were as follows:

### - physicochemical properties:

No appreciable differences were found in the percentages of protein, humidity, insolubles, ash and colour in the SDAP studied at 37°C comparing the control samples (0 days) with the other samples (from 7 to 14 days). The firmness of the gel and the water retention capacity increased under the 37°C treatment with respect to the control.

Table 19 resumes the results obtained:

**TABLE 19**

| Time (days) | P (%) | H (%) | I (%) | A (%) | Colour (ΔE) | Gel Firmness Peak (g) | Water retention (%) |
|---|---|---|---|---|---|---|---|
| 0 | 74.75 | 7.40 | 3.28 | 14.54 | 67.4 | 720 | 433.6 ± 2.99 |
| 7 | 75.22 ± 0.32 | 7.23 ± 0.09 | 2.83 ± 0.16 | 14.68 ± 0.08 | | 703.7 ± 13.6* | 442.3 ± 6.01 |
| 15 | 74.50 ± 0.16 | 7.02 ± 0.26 | 3.85 ± 0.42 | 14.66 ± 0.04 | 64.63 ± 0.81 | 831.3 ± 10.6 | 527.2 ± 2.83 |

### - Microbiological properties

Total count. - When the SDAP is packaged in the new bags (35 microns thickness polyethylene sheet with 2.1 g/m2/day water permeability) and treated in the above conditions, the microbiological contamination diminished in a manner similar to that of the product packaged in aluminium bags or 200 microns thickness polyethylene (0.5 g/m2/day). Thus, diminution is found to be 1 logarithm each week.

Other microbiological contamination. - It seems that the Clostridium contamination could diminish with this treatment, this assay finding a 50% reduction each week.

Table 20 resumes the results obtained:

**TABLE 20**

| Time (days) | Total count (cfu/g) | Enterobacteria (cfu/g) | Clostridium SR (cfu/g) | Salmonella (25 g) |
|---|---|---|---|---|
| 0 | 1.3 × 10⁵ | < 10 | 450 | Absence |
| 7 | 5.4 × 10⁴ ± 1.3 × 10⁴ | < 10 | 277 ± 47 | Absence |
| 15 | 5.5 × 10³ ± 4.9 × 10² | < 10 | 130 ± 14 | Absence |

### Example 8

The aim of this assay was to study the effect of powdered whole blood storage at 37% on the microbiological charge without change in other properties. For such, 10 paper bags with a high density 35 microns thickness polyethylene sheet (gauge 140) having a water permeability of 2.1 g/m2/day (25 kg) were subjected to the above temperature for 7 weeks.

The results obtained were as follows.

### - Physicochemical properties

No significant differences were found in the percentages of protein, humidity and ash in the product studied at 37°C as against the control at 0 days. However a slight increase in the percentage of insolubles was found but which was in compliance with specifications. Powdered whole blood thus maintained its physical and chemical properties within the limits of specifications.

Table 21 resumes the results obtained:

**TABLE 21**

| Time (days) | P (%) | H (%) | I (%) | A (%) |
|---|---|---|---|---|
| 0 | 94.43±0.26 | 4.24±0.09 | 5.67±0.79 | 5.61±0.07 |
| 7 | 95.69±0.06 | 3.88±0.16 | 6.66±0.10 | 5.72±0.14 |
| 14 | 95.97±0.03 | 4.23±0.04 | 6.95±0.55 | 5.48±0.07 |
| 21 | 95.76±0.12 | 4.30±0.09 | 7.53±0.32 | 5.53±0.02 |
| 35 | 95.64±0.32 | 3.84±0.06 | 8.53±0.14 | 5.55±0.06 |
| 49 | 96.02±0.09 | 4.23±0.05 | 8.25±0.22 | 5.57±0.07 |

### Microbiological properties

Total count. - When powdered whole blood is packaged in the bags with polyethylene sheet having 2.1 g/m2/day water permeability and treated with the above process, the microbiological contamination diminished approximately 0.5 logarithms each week, with the most significant diminution occurring the first week of treatment.

Other microbiological contamination. - It seems that the Clostridium contamination diminishes with this treatment, although it is difficult to assess with the results obtained.

No differences in enterobacteria and Salmonella were found, due to the fact that the initial contamination was very low.

Table 22 resumes the results obtained:

**TABLE 22**

| Time (days) | Total count (cfu/g) | Enterob. (cfu/g) | Clostridium SR (cfu/g) | Salmonella (25 g) |
|---|---|---|---|---|
| 0 | 6.2 × 10⁴ ± 1.8 × 10⁴ | < 10 | 13 ± 4 | Absence |
| 7 | 1.3 × 10⁴ ± 1.3 × 10³ | < 10 | 7 ± 2 | Absence |
| 14 | 1.1 × 10⁴ × 6.0 × 10² | < 10 | < 10 | Absence |
| 21 | 9.0 × 10³ ± 1.0 × 10³ | < 10 | 12 ± 5 | Absence |
| 35 | 4.3 × 10³ ± 5.3 × 10² | < 10 | 8 ± 2 | Absence |
| 49 | 4.0 × 10³ ± 1.1 × 10² | < 10 | < 10 | Absence |

## Claims

1. Manufacturing method for a packaged powdered animal blood derived product, **characterised in that** it comprises a packaging phase, performed with an enveloping whose permeability to water vapour is less than 3 g/m2/day, and subsequently a thermal treatment phase for said packaged product at a temperature of between 30°C and 60°C for a period of time longer than 24 hours.

2. Method according to claims 1, **characterised in that** said temperature is of between 33°C and 40°C.

3. Method according to claims 1 or 2, **characterised in that** said period of time is longer than 7 days, preferably between 10 and 20 days.

4. Method according to claim 1, **characterised in that** said temperature is greater than 40°C and said period of time is less than 21 days.

5. Packaged powdered animal blood derived product **characterised in that** it is packaged in an enveloping whose permeability to water vapour is less than 3 g/m2/day.

6. Product according to claim 5, **characterised in that** it has humidity of less than 15% in weight, preferably less than 10% in weight.

7. Product according to one of claims 5 or 6, **characterised in that** it has a quantity of total aerobes less than 10⁵ cfu/g, preferably less than 5 x 10⁴ cfu/g, and more preferably less than 10⁴ cfu/g.

8. Product according to at least one of claims 5 to 7, **characterised in that** it is a product of the group comprising plasma, red corpuscle, haemoglobin, and protein fractions derived from animal blood, any one of which come from an animal slaughtered in an abattoir.

9. Product according to at least one of claims 5 to 8, **characterised in that** said enveloping comprises a sheet material of the group comprising polyolefines, aluminium and combinations of the above.

10. Use of a sheet material whose permeability to water vapour is less than 3 g/m2/day for the manufacture of enveloping for products derived from powdered animal blood.

11. Use of a method according to at least one of claims 1 to 4, to increase the water retention capacity of a powdered blood plasma.

12. Use of a method according to at least one of claims 1 to 4, for accelerated diminution in the quantity of total micro-organisms in a product derived from powdered animal blood.

13. Use of a method according to at least one of claims 1 to 4, for the preparation of packaged powdered animal blood derived products suitable for human and animal consumption.

## Patentansprüche

1. Verfahren zur Herstellung eines verpackten pulverförmigen von Tierblut abgeleiteten Produkts, **dadurch gekennzeichnet, dass** es eine Verpackungsstufe, die unter Verwendung einer Umhüllung mit einer Wasserdampfdurchlässigkeit von weniger als 3 g/m²/Tag durchgeführt wird und eine anschließende Wärmebehandlungsstufe des verpackten Produkts bei einer Temperatur zwischen 30°C und 60°C während einer Dauer von mehr als 24 Stunden umfasst.

2. Verfahren nach Anspruch 1, **dadurch gekennzeichnet, dass** die Temperatur zwischen 33°C und 40°C ist.

3. Verfahren nach Anspruch 1 oder 2, **dadurch gekennzeichnet, dass** die Dauer mehr als 7 Tage beträgt und vorzugsweise zwischen 10 und 20 Tagen ist.

4. Verfahren nach Anspruch 1, **dadurch gekennzeichnet, dass** die Temperatur mehr als 40°C beträgt und die Dauer weniger als 21 Tage ist.

5. Verpacktes pulverisiertes von Tierblut abgeleitetes Produkt, **dadurch gekennzeichnet, dass** es in eine Umhüllung gepackt ist, deren Wasserdampfdurchlässigkeit weniger als 3 g/m²/Tag beträgt.

6. Produkt nach Anspruch 5, **dadurch gekennzeichnet, dass** es eine Feuchtigkeit von weniger als 15 Gew.-%, vorzugsweise weniger als 10 Gew.-% hat.

7. Produkt nach einem der Ansprüche 5 oder 6, **dadurch gekennzeichnet, dass** es eine Menge an Gesamt-Aeroben von weniger als 10⁵ Kolonie-bildenden Einheiten/g, vorzugsweise weniger als 5 x 10⁴ Kolonie-bildenden Einheiten/g und stärker bevorzugt weniger als 10⁴ Kolonie-bildenden Einheiten/g besitzt.

8. Produkt nach mindestens einem der Ansprüche 5 bis 7, **dadurch gekennzeichnet, dass** es ein Produkt aus der aus Plasma, roten Blutkörperchen, Hämoglobin und von Tierblut abgeleiteten Proteinfraktionen bestehenden Gruppe ist, die jeweils von einem im Schlachthof geschlachteten Tier stammen.

9. Produkt nach mindestens einem der Ansprüche 5 bis 8, **dadurch gekennzeichnet, dass** die Umhüllung ein Folienmaterial aus der Gruppe der Polyolefine, Aluminium und Kombinationen der vorstehenden umfasst.

10. Verwendung eines Folienmaterials, dessen Wasserdampfdurchlässigkeit weniger als 3 g/m²/Tag beträgt, zur Herstellung einer Umhüllung für Produkte, die von pulverförmigem Tierblut abgeleitet sind.

11. Anwendung eines Verfahrens nach mindestens einem der Ansprüche 1 bis 4 zur Erhöhung der Wasserrückhaltefähigkeit von pulverförmigem Blutplasma.

12. Anwendung eines Verfahrens nach mindestens einem der Ansprüche 1 bis 4 zur beschleunigten Verminderung der Menge an Gesamt-Mikroorganismen in einem von pulverförmigem Tierblut abgeleiteten Produkt.

13. Anwendung eines Verfahrens nach mindestens einem der Ansprüche 1 bis 4 zur Herstellung von verpackten von pulverförmigem Tierblut abgeleiteten Produkten, die sich zum menschlichen und tierischen Verzehr eignen.

## Revendications

1. Procédé de fabrication pour un produit dérivé du sang animal sous la forme de poudre et emballé, **caractérisé en ce qu'**il comprend une phase d'emballage réalisée avec un emballage dont la perméabilité à la vapeur d'eau est inférieure à 3 g/m₂/jour et, ensuite, une phase de traitement thermique pour ledit produit emballé à une température comprise entre 30°C et 60°C pendant une période de temps supérieure à 24 heures.

2. Procédé selon la revendication 1, **caractérisé en ce que** ladite température se situe entre 33°C et 40°C.

3. Procédé selon la revendication 1 ou 2, **caractérisé en ce que** ladite période de temps est supérieure à 7 jours, de préférence entre 10 et 20 jours.

4. Procédé selon la revendication 1, **caractérisé en ce que** ladite température est supérieure à 40°C et ladite période de temps inférieure à 21 jours.

5. Produit dérivé du sang animal sous forme de poudre et emballé, **caractérisé en ce qu'**il est emballé dans un emballage dont la perméabilité à la vapeur d'eau est inférieure à 3 g/m₂/jour.

6. Produit selon la revendication 5, **caractérisé en ce qu'**il a une humidité inférieure à 15% en poids, de préférence inférieure à 10% en poids.

7. Produit selon l'une quelconque des revendications 5 ou 6, **caractérisé en ce qu'**il a une quantité totale d'aérobies inférieure à 10⁵ cfu/g, de préférence inférieure à 5 x 10⁴ cfu/g et, mieux encore, inférieure à 10⁴ cfu/g.

8. Produit selon au moins l'une quelconque des revendications 5 à 7, **caractérisé en ce qu'**il fait partie du groupe comprenant le plasma, les globules rouges, l'hémoglobine et de fractions protéiques dérivées de sang animal, dont l'un quelconque provient d'un animal abattu dans un abattoir.

9. Produit selon au moins l'une quelconque des revendications 5 à 8, **caractérisé en ce que** ledit emballage contient un matériau en feuille du groupe comprenant les polyoléfines, l'aluminium et leurs combinaisons.

10. Utilisation d'un matériau en feuille dont la perméabilité à la vapeur d'eau est inférieure à 3 g/m2/jour pour la fabrication d'emballage pour des produits dérivés de poudre de sang animal.

11. Utilisation d'un procédé selon au moins l'une quelconque des revendications 1 à 4 pour augmenter la capacité de rétention d'eau d'un plasma sanguin en poudre.

12. Utilisation d'un procédé selon au moins l'une quelconque des revendications 1 à 4 pour accélérer la diminution de la quantité totale de microorganismes d'un produit dérivé de poudre de sang animal.

13. Utilisation d'un procédé selon au moins l'une quelconque des revendications 1 à 4 pour la préparation de produits dérivés du sang animal sous forme de poudre et emballé, convenant à la consommation humaine et animale.
